# EUROPÄISCHE PATENTSCHRIFT

(11) **EP 0 967 423 B1**
(45) Veröffentlichungstag und Bekanntmachung des Hinweises auf die Patenterteilung: **07.01.2004**
(21) Anmeldenummer: 99111543.7
(22) Anmeldetag: 15.06.1999
(51) Int. Cl.: F16J 3/04, F16J 15/22

(54) **Packungsgarn aus Graphit- und Metallfolie**
Packing yarn of graphite and plastic sheet
Garniture d'étanchéité en graphite et feuille de plastique

(30) Priorität: 27.06.1998 DE 19828790
(43) Veröffentlichungstag der Anmeldung: 29.12.1999
(73) Patentinhaber: SGL CARBON AG, 65203 Wiesbaden (DE)
(72) Erfinder: Öttinger, Oswin Dr.-Ing., 86405 Meitingen (DE); Schellenberger, Bernd, 86368 Gersthofen (DE)

(56) Entgegenhaltungen:
- EP-A- 0 340 303
- EP-A- 0 681 125
- GB-A- 2 285 067
- US-A- 5 509 993

## Beschreibung

Die der Patentanmeldung zugrunde liegende Erfindung betrifft ein Packungsgarn aus mindestens zwei nach einem Garnherstellungsverfahren miteinander verbundenen Bändern aus einem Schichtstoff, der aus alternierend angeordneten Schichten von mindestens zwei flächigen Werkstoffen, die miteinander verbunden sind, besteht und zwar erstens, aus mindestens einer Lage aus flexiblem Graphit und zweitens, mindestens einer Lage eines verstärkenden Mittels,
- wobei entweder beide äußeren Flachseiten der oberen und der unteren Schicht des Schichtstoffes aus flexiblem Graphit oder nur eine dieser Flachseiten aus flexiblem Graphit oder keine dieser Flachseiten aus flexiblem Graphit besteht. Eine Ausführungsform dieses Packungsgarns besteht aus mindestens zwei miteinander verdrillten Bändern aus einem Schichtstoff, der aus nur einer Lage aus flexiblem Graphit, die auf mindestens einer ihrer beiden Flachseiten mit mindestens einem verstärkenden Mittel verbunden ist, aufgebaut ist.

Packungsgarne der vorgenannten Art werden zum Herstellen von Dichtungen und insbesondere von Packungen zum Abdichten von Wellen- und Spindeldurchführungen verwendet. Nach einem bekannten Verfahren dazu werden zwei oder mehr Packungsgarne nach einem textilen Verarbeitungsverfahren wie z.B. Flechten, zu einer Schnur oder einem Zopf zusammengefaßt und sodann auf eine bestimmte, vorgegebene Länge zugeschnittene Teile solcher Schnüre oder Zöpfe in einer geeigneten Preßform zu einem Packungsring verdichtet. Mehrere solcher Packungsringe ergeben dann, wenn sie in den passenden Packungsraum einer Stopfbuchse eingesetzt worden sind, eine Stopfbuchspackung. Nach einem anderen bekannten Verfahren werden zugeschnittene Längen einer aus den Packungsgarnen hergestellten Schnur oder eines so hergestellten Zopfes, die den Maßen eines bestimmten Packungsraumes entsprechen, direkt in diesen Packungsraum eingelegt und die so hergestellte, noch stark komprimierbare Packung durch die Packungsbrille bis zum Dichthalten der Packungsanordnung angespannt. Nach einem dritten Verfahren können die Packungsgarne oder aus ihnen hergestellte Packungsschnüre oder -zöpfe direkt um die Welle oder Spindel, deren Durchführung gedichtet werden soll, gewickelt werden, bis die für die Herstellung der benötigten Packung erforderliche Menge an Packungsgarn oder -zopf aufgewickelt ist und es kann der so erzeugte Wickel nach dem Versenken in dem Packungsraum mit Hilfe der Packungsbrille bis zum Dichthalten der Packungsanordnung angespannt werden.

Packungsgarne der vorgenannten Art werden u.a. unter Verwendung von flexiblem Graphit oder von expandiertem Graphit hergestellt. Expandierter Graphit wird durch kurzzeitiges Erhitzen von Graphitsalzen oder Graphiteinlagerungsverbindungen in Form einer lockeren, wurmförmigen Substanz erhalten. Durch Verdichten des so erhaltenen expandierten Graphits wird der flexible Graphit erhalten, der im allgemeinen in Form von Graphitfolien oder - Platten erzeugt wird (siehe z.B. U.S.-Pat. Nr. 3,404,061). Zum Herstellen von Packungsgarnen oder Packungsschnüren oder -zöpfen durch beispielsweise Flecht-, Strick- oder Verdrillprozesse werden die Graphitfolien in Streifen oder Bänder bestimmter Breite geschnitten und diese Streifen dann zu Packungsgarnen und diese dann zu den Schnüren, Zöpfen oder Strängen weiterverarbeitet. Trotz einer gewissen Flexibilität reißen oder/und brechen die Streifen oder Bänder aus flexiblem Graphit bei diesen Verarbeitungsprozessen, da speziell ihre Zugfestigkeit zu gering ist. Es sind deshalb eine Vielzahl von Möglichkeiten angegeben worden, die vorgenannten Schwierigkeiten beim Herstellen von Packungsmaterialien aus flexiblem Graphit zu bewältigen.

Bei einer Gruppe von Lösungen des Problems verwendet man ein Substrat mit ausreichend großer Zugfestigkeit, das mit einem Haftvermittler, z. B. einem Kleber, ausgerüstet ist, belegt dieses Substrat mit expandiertem Graphit und preßt den expandierten Graphit mit dem Substrat zusammen. Als Substrate können Metalldrähte, Kunst- und Naturfasern oder - Fäden, Gewebe und Folien verschiedener Art verwendet werden. Die so erhaltenen Stränge oder Bänder werden dann gegebenenfalls nochmals z.B. durch Umstricken oder Umflechten oder sonst eine andere Art und Weise zusätzlich mit Fäden, Fasern oder Drähten verstärkt und durch die bekannten Verarbeitungsverfahren wie Flechten, zu Vorprodukten für Packungen weiterverarbeitet (EP 0 388 481 = U.S. 4,961,988; EP 0 466 923 B1 = U.S. 5,370,405).

EP-A-340 303 offenbart ein Packungsgarn dieser Art, wobei als Substrat eine Metallfolie verwendet wird.

Bei einer anderen Gruppe von Lösungen geht man von Graphitfolien aus, die in Streifen geschnitten worden sind. In EP 0 253 031 B1 = U.S. 4,705,722 wird dazu beschrieben, Bänder aus flexiblem Graphit mit einer Breite von nicht mehr als 5 mm übereinanderzulegen und mit einem Geflecht oder Gestrick aus einem Fasermaterial zu umgeben. Die so erhaltenen Stränge werden dann weiter zu Kordeln geflochten, die als Ausgangsmaterial für das Herstellen von Packungen geeignet sind. Gemäß EP 0 466 923 B1 = U.S. 5,370,405 werden Graphitfolienstreifen mit einer Breite von nicht mehr als 5 mm mittels Klebern mit verstärkenden organischen, anorganischen oder metallischen Fasern verbunden, diese verstärkten Folienstreifen durch Flechten etc. zu Kordeln verarbeitet und diese Kordeln nochmals mit einem verstärkenden Fasergeflecht umgeben, ehe sie zu Packungen weiterverarbeitet werden. Durch EP 0 681 125 A1 wird offenbart, breite Rollen Graphitfolien zu Rollen von geringerer Breite zu zerschneiden, die so erhaltenen Folienbänder mit einer quer verlaufenden Einprägung oder Riffelung zu versehen, diese geriffelten Folienbänder zu vergleichsweise schmalen Streifen von ca. 2 mm Breite zu schneiden und diese schmalen, geriffelten Streifen zu einem Strang zusammenzufassen und mit einem verstärkenden Fasergeflecht zu umgeben. Nach EP 0 340 303 = U.S. 5,240,769 und U.S. 5,134,030 werden auf eine Breite von nicht mehr als 5 mm geschnittene Streifen aus Graphitfolie mit organischen, anorganischen oder metallischen Fäden, Fasern oder Folien belegt und dadurch verstärkt und diese verstärkten Graphitfolienstreifen bei der weiteren Verarbeitung zu verflecht- oder verdrillbaren Packungsgarnen zusätzlich mit einer weiteren Verstärkung aus Fasern ausgerüstet. Bei dieser technischen Lösung können auch mehrere Streifen Graphitfolie übereinandergelegt und verarbeitet werden. Gemäß EP 0 794 367 A2 können Graphitfolienbänder mit einer Breite von mehr als 6 mm mit einer Vielzahl von Mitteln, wie Drähten, Bändern, Garnen aus anorganischen, metallischen oder organischen Mitteln verstärkt und dann zu Packungsschnüren oder -kordeln verflochten werden. Die Graphitfolien können hier auch durch eine Oberflächenbeschichtung aus Kunststoff oder durch Laminieren mit einem Kunststoff verstärkt sein. Nachteilig an diesen verstärkten Graphitfolienbändern ist ihre Breite von mehr als 5 mm, die für ein Verflechten oder Verstricken und für das Herstellen von Packungen wie aus den Offenbarungen von EP 0 253 031 oder EP 0 340 303 hervorgeht, ungünstig ist. Derartige Folien lassen sich schwer verarbeiten und ergeben Packungsschnüre von weniger dichtem Aufbau.

Deshalb bedient man sich beim Verarbeiten von breiteren Bändern und Lagen aus Graphitfolien bevorzugt Falttechniken. So entnimmt man aus EP 0 444 456 A1, daß einzelne oder zu mehreren übereinander gelegte Folienbänder quer zu ihrer Längserstreckung gefaltet werden und aus dem gefalteten Gebilde entweder direkt oder nach dem Umflechten des gefalteten Gebildes mit Fäden, Fasern oder Drähten ein Packungsring erhalten werden kann. Vor dem Falten können die Folienbänder noch zum Verstärken mit Fäden, Fasern oder Geweben verbunden werden oder diese Verstärkungsmittel werden vor dem Falten zwischen die Folienlagen gelegt. Es wird auch ein Einlegen von korrosionsbeständigen Kunststoffolien, die vorzugsweise zusätzlich Gleiteigenschaften aufweisen wie z.B. Folien aus Polytetrafluorethylen, beschrieben. Diese Kunststoffolien dienen jedoch nicht Verstärkungszwecken. Gemäß U.S. 5,605,341 und U.S. 5,549,306 werden breite Graphitfolienbänder entlang ihrer Längserstreckung S-förmig oder spiralförmig gefaltet, wobei vor dem oder beim Falten Faserverstärkungen eingelegt werden können. Die so erhaltenen Stränge werden dann noch zum weiteren Verstärken mit Fasern umflochten oder umstrickt, um sie zum Herstellen von Packungen geeignet zu machen. Aus U.S. 5,225,262 entnimmt man, daß in Graphitfolien Längsprofile eingeprägt und die so vorbereiteten Graphitfolien mindestens einmal parallel zum Verlauf der Längsprofilierung gefaltet werden. Die gefalteten Gebilde werden sodann mit einem Garn, das vorzugsweise aus Inconel(TM) besteht, durch beispielsweise Flechten oder Stricken umgeben und dann kalibriert. Die so erzeugten Stränge werden dann zu einer Packungsschnur verflochten, diese kalibriert und danach nochmals mit einem temperaturbeständigen, hochfesten Garn umflochten. GB 2 285 067 A offenbart, Graphitfolienbahnen, die mit Klebstoff belegt sein können, in mehreren Lagen übereinander zu legen und mindestens eine der Oberflächen dieses Geleges mit Fasern oder Fäden zu belegen, die parallel zur Längserstreckung des Geleges verlaufen und sich nicht kreuzen. Sodann werden die mit Fasern belegten Foliengelege parallel zu den Fasern oder Fäden in Streifen geschnitten und die so erhaltenen Stränge so gefaltet oder verrundet, daß ein Strang entsteht, der aus einem Graphitfolienkern mit einer äußeren Bedeckung aus in Längsrichtung parallel laufenden Fasern oder Fäden besteht. Die äußere Armierung mit Fasern oder Fäden soll das Austreten des Foliengraphits bei Anwendung von Druck verhindern.
Aus der EP 0 601 670 ist ein Verfahren zum Herstellen von Packungsgarnen oder Packungsbändern unter Verwendung von Graphitfolienbändern zu entnehmen. Dabei werden Graphitfolienbänder auf einer ihrer Oberflächen zunächst mit einer Kleberschicht versehen, auf die ein verstärkend wirkender Faden aufgebracht wird. Das mit dem verstärkenden Faden versehene Graphitfolienband wird sodann durch eine konisch zulaufende Düse gezogen und dann zwischen zwei Rollen platt gepreßt. Bei diesem Vorgang wird das Band zuerst verrundet und dann unter Einbinden des verstärkenden Fadens und unter Verkleben der innen liegenden Flächen der Graphitfolie miteinander zu einem verflechtbaren Band geformt, das dann zu Vorprodukten für das Herstellen von Packungen oder direkt zu Packungen verarbeitet werden kann. Das Aufbringen des Klebstoffs kann mit einer beidseitig mit Klebstoff beschichteten Folie geschehen. Diese Folie dient jedoch nicht zum Zweck der Verstärkung.

Bei den vorbeschriebenen Lösungen zum Herstellen von Packungsgarnen, -schnüren, -bändern oder Packungen werden entweder Fasern zum Verstärken der wenig zugfesten Graphitfolien bzw. Graphitfolienbänder oder es werden Kombinationen von Faserverstärkungen und Folien verwendet. Das gezielte Aufbringen und kraftschlüssige Koppeln von Fasern an die Graphitfolie ist vergleichsweise schwierig und das Umflechten von Graphitfolien oder Graphitfolienbändern auf deren Außenseiten ist vergleichsweise aufwendig und in fast allen Fällen ist es erforderlich, mindestens zwei Verstärkungen in die Graphitfolienbänder einzubauen, um diese genügend zugfest zu machen und dem resultierenden Packungsstrang gute Gebrauchseigenschaften zu geben. Wenn eine Verstärkung der Graphitfolienbänder mit Folien, die aus anderen Materialien bestehen, gewählt wird, ist entweder eine zusätzliche Verstärkung durch Fäden, Fasern oder Drähte oder wie im Falle der EP 0 794 367 die Verwendung von Graphitfolienbändern von 6 mm Breite oder mehr erforderlich.

Es war deshalb die Aufgabe der der Patentanmeldung zugrundeliegenden Erfindung, die vorbeschriebenen Nachteile zu beseitigen. Insbesondere war es die Aufgabe, ein Packungsgarn zu schaffen, das zum weitaus größten Teil aus verformbarem Graphit besteht, dabei keine Fasern, Fäden oder Drähte als verstärkendes Material enthält, hoch reißfest ist, sich gut nach allen gebräuchlichen Verfahren, einschließlich Verdrill-, Flecht- und Strickverfahren, zu Packungen verarbeiten läßt und dessen Herstellung mit einem Minimum einfacher Verfahrensschritte möglich ist. Eine weitere Aufgabe der Erfindung war es, ein Verfahren zum Herstellen von Packungsgarnen der vorgenannten Art anzugeben.

Die Aufgabe wird gelöst gemäß Patentanspruch 1 durch Bereitstellen eines Packungsgarns aus mindestens zwei nach einem Garnherstellungsverfahren miteinander verbundenen Bändern aus einem Schichtstoff, der aus alternierend angeordneten Schichten von mindestens zwei flächigen Werkstoffen, die miteinander verbunden sind, besteht und zwar erstens, aus mindestens einer Lage aus flexiblem Graphit und zweitens, mindestens einer Lage eines verstärkenden Mittels, wobei entweder beide äußeren Flachseiten der oberen und der unteren Schicht des Schichtstoffes aus flexiblem Graphit besteht oder nur eine dieser Flachseiten aus flexiblem Graphit oder keine dieser Flachseiten aus flexiblem Graphit besteht, und wobei die Packungsschnur dadurch gekennzeichnet ist, daß die Bänder aus Schichtstoff eine Breite von nicht mehr als 5 mm aufweisen und aus Lagen flexiblen Graphits, der eine Dicke von nicht mehr als 1 mm und eine Rohdichte im Bereich von 0,7 bis 1,8 g/cm³ aufweist und aus Lagen von Metallfolien aus der Gruppe Nickel, Nickellegierungen, Eisen, Eisenlegierungen, Stahl, Edelstahl, Kupfer, Kupferlegierungen, Aluminium, Aluminiumlegierungen mit einer Dicke im Bereich von 5 bis 50 µm und mit einer Zugfestigkeit von mindestens 250 MPa bestehen. Eine weitere Lösung der Aufgabe besteht nach Patentanspruch 2 im Bereitstellen einer Packungsschnur aus mindestens zwei nach einem Garnherstellungsverfahren miteinander verbundenen Bändern aus einem Schichtstoff, der aus nur einer Lage aus flexiblem Graphit, die auf mindestens einer ihrer beiden Flachseiten mit mindestens einem verstärkenden Mittel verbunden ist, besteht, wobei dieses Packungsgarn dadurch gekennzeichnet ist, daß die Bänder aus Schichtstoff eine Breite von nicht mehr als 5 mm aufweisen und aus einer Lage flexiblen Graphits, der eine Dicke von nicht mehr als 1 mm und eine Rohdichte im Bereich von 0,7 bis 1,8 g/cm³ aufweist und aus mindestens einer Lage einer Metallfolie aus der Gruppe Nickel, Nickellegierungen, Eisen, Eisenlegierungen, Stahl, Edelstahl, Kupfer, Kupferlegierungen, Aluminium, besteht, wobei die Metallfolie eine Dicke im Bereich von 5 bis 50 µm und eine Zugfestigkeit von mindestens 250 MPa aufweist.
Die Aufgabe wird desweiteren durch die Angabe eines Verfahrens zum Herstellen von Packungsgarnen des vorgenannten neuen Typs gelöst. Die nachgeordneten Patentansprüche geben vorteilhafte Ausgestaltungen der erfinderischen Lösungen an.

Das Packungsgarn gemäß der Erfindung ist aus zwei oder mehr als zwei Bändern aufgebaut, die miteinander durch textile Verarbeitungsverfahren wie beispielsweise Flechten, Stricken, Weben oder Verdrillen zu einem Garn oder einem Strang verbunden sind. Wegen seiner Einfachheit und seines geringen Aufwandes in Verbindung mit dem Erreichen einer guten Produktqualität, ist das Verdrillen bevorzugt. Die mindestens zwei Bänder aus dem Schichtstoff, die miteinander zu einem Packungsgarn verbunden werden sollen, haben vorzugsweise einen rechteckigen oder quadratischen Querschnitt und sind unverdrillt. Es kann jedoch mindestens eins davon vor dem Verarbeiten zu einem Packungsgarn für sich verdrillt worden sein. Aus Graphit- und Metallfolien bestehende Schichtstoffbänder sind häufig vergleichsweise steif. Deshalb ist es in vielen Fällen vorteilhaft, die Bänder vor dem Verarbeiten zu Packungsgarnen oder bereits die fertigen Schichtstoffe vor dem Zerteilen zu Bändern mit einer quer zur Längserstreckung der Bänder oder der späteren Bänder verlaufenden Riffelung oder Rillung zu versehen, die vorteilhafterweise durch einen Prägeprozeß eingebracht wird. Nach oben ist die Anzahl der zu einem Packungsgarn zusammenfügbaren Bänder durch das Arbeitsverfahren, das angewandt wird, begrenzt. Im allgemeinen werden durch Verdrillen bis zu 12 Bänder zu einer Packungsschnur zusammengefügt. Vorzugsweise werden jedoch 2 bis 6 Bänder miteinander verdrillt. Die Anzahl der Bänder, die zu einem Packungsgarn zusammengefügt werden sollen, hängt auch von der Breite und der Dicke der Bänder ab. Die Breite soll 5 mm nicht überschreiten, um hochwertige Packungsgarne zu erhalten. Für die meisten Verarbeitungsverfahren und Anwendungsfälle haben sich Breiten der Bänder von nicht mehr als 3 mm und Dicken von nicht mehr als 2 mm bewährt. Wenn besonders dünne oder flexible Packungsgarne hergestellt werden sollen, empfiehlt sich die Verwendung von Bändern mit einer Breite von nicht mehr als 2 mm und einer Dicke von nicht mehr als 1 mm. Die angegebenen Verhältnisse von Breiten zu Dicken geben günstige Bänderquerschnitte wieder. Eine Kopplung zwischen diesen Werten für die Bänder besteht nicht. Im Extremfall können auch Bänder mit einer Breite von 5 mm und einer Dicke von unter 0,35 mm verwendet werden. Die Bänder müssen, um überhaupt nach einem der vorstehenden Verfahren verarbeitet werden zu können, eine gewisse Mindestzugfestigkeit aufweisen und sie müssen auch für das Weiterverarbeiten zu Packungsgarnen, Packungsschnüren, Packungszöpfen oder zu Packungen eine entsprechende Zugfestigkeit haben und sie müssen den aus ihnen hergestellten Packungen auch bestimmte Eigenschaften, auf die im folgenden noch eingegangen werden wird, verleihen. Da die Graphitfolien allein und die allein aus Graphitfolien herstellbaren Bänder eine völlig ungenügende Zugfestigkeit und Reißfestigkeit haben, wird die Zugfestigkeit der für diese Erfindung beschriebenen Bänder aus einem Schichtstoff durch die Zugfestigkeit der mit den Graphitfolien verbundenen Metallfolien bestimmt. Bei Bändern, die für das Weiterverarbeiten zu Packungsgarnen geeignet sein sollen, reicht es nach den Erkenntnissen der Erfinder nicht aus, irgendwelche Metallfolien zu verwenden. Für den Zweck der Erfindung müssen vielmehr Metallfolien gewählt werden, die eine bestimmte Dicke nicht überschreiten und eine bestimmte Mindestzugfestigkeit haben und die auf irgendeine Art und Weise mit der Graphitfolie verbunden werden können. Die Zugfestigkeit dieser Metallfolien sollte deshalb mindestens 250 MPa, bevorzugt mehr als 400 MPa betragen. Die Dicke jeder der verwendeten Metallfolien in der Packungsschnur soll höchstens 50 µm betragen. Bevorzugt liegt ihre Dicke im Bereich von 10 µm bis 30 µm. Sie soll aber nicht geringer als 5 µm sein. Die für das Herstellen des Schichtstoffes und der Bänder aus dem Schichtstoff verwendeten Graphitfolien dürfen nicht zu locker aufgebaut sein und sie dürfen auch nicht zu steif sein. Wären sie, auch bei ihrer Kopplung mit den Metallfolien in den Schichtstoffbändern, zu locker oder mechanisch zu wenig fest, würden sie zu stark zum Abbröckeln neigen. Wären sie zu steif, wären sie für das Verarbeiten und den Gebrauch nicht flexibel genug. Die Graphitfolien dürfen, um noch genügend flexibel zu sein, auch nicht zu dick sein. Deshalb ist ihre Dicke auf höchstens 2 mm und bevorzugt auf kleiner als 1 mm und ihre Rohdichte auf den Bereich von 0.7 bis 1,8 g/cm³ und bevorzugt auf den Bereich von 1,0 bis 1,4 g/cm³ begrenzt. Die Schichtstoffbänder, aus denen das Packungsgarn hergestellt wird, sollen nicht breiter als 5 mm und vorzugsweise nicht breiter als 3 mm sein, damit sie problemlos miteinander nach den vorgenannten textilen Verfahren, insbesondere durch Verdrillen oder Verflechten verarbeitet werden können. Für die meisten Anwendungsfälle sind auch Breiten von 2 mm und weniger vorteilhaft.

Um die Hochtemperaturfestigkeit der Packungsgarne zu sichern und um Korrosionen der an die Packungen aus den erfindungsgemäßen Packungsgarnen angrenzenden Werkstoffe zu verhindern, darf der flexible Graphit in den Packungsgarnen nur einen geringen Gehalt an Verunreinigungen haben. Im allgemeinen soll der Kohlenstoffgehalt der Graphitfolien mindestens 96 Gewichtsprozent und vorzugsweise mindestens 99 Gew.-% betragen.

Die Bänder, aus denen die Packungsgarne durch textile Verfahren hergestellt werden, können aus einer Lage Graphitfolie und aus einer mit dieser Graphitfolie verbundenen Lage einer Metallfolie bestehen. Es ist jedoch häufig günstiger, mehr als eine Lage flexiblen Graphits mit mehr als einer Lage Metallfolie zu einem Schichtstoff zu kombinieren. In einem solchen Schichtstoff folgt auf jede Lage Graphitfolie eine Lage Metallfolie und alle Folien sind miteinander verbunden. Wie viele Folien übereinander angeordnet werden, richtet sich nach den jeweiligen praktischen Gegebenheiten und dem Herstellungsaufwand. Im allgemeinen werden nicht mehr als vier Graphitfolien in geeigneter Weise mit Metallfolien zu einem Schichtstoff kombiniert. Bevorzugte Schichtstoffe enthalten 2 bis 3 Graphitfolien. Die äußeren Flachseiten der Graphitfolien der Schichtstoffe können frei von jeder Bedeckung sein. Es können jedoch sowohl eine oder beide dieser zwei Flachseiten eine Metallfolie tragen und mit dieser verbunden sein. Welche der drei Varianten gewählt wird, hängt vom späteren Einsatzzweck der aus den Packungsgarnen hergestellten Packung ab. Es ist auch möglich, eine oder beide der äußeren Flachseiten eines Schichtstoffes, von denen jede sowohl aus Graphit als auch aus Metall bestehen kann, mit einer Kunststoffolie aus der Gruppe der perfluorierten polymeren Kohlenwasserstoffe, Polyester, Polyimide zu bedecken und zu verbinden. Von den perfluorierten polymeren Kohlenwasserstoffen sind Polytetrafluorethylen und Tetrafluorethylen-Perfluorpropylen-Copolymerisat besonders bevorzugt. Folien aus diesen Werkstoffen haben eine ausgezeichnete Chemikalienbeständigkeit, eine gute Temperaturbeständigkeit und ausgezeichnete Gleiteigenschaften. sie fügen sich deshalb gut in das Leistungsspektrum der beschriebenen Schichtstoffe ein und tragen dazu bei, das Ankleben der Graphitpackungen an den den Packungsraum begrenzenden Werkstoffen zu verhindern.

Als verstärkend wirkende Folien sind alle Metallfolien geeignet, die die vorgenannten Bedingungen für die Zugfestigkeit erfüllen, die genügend korrosionsfest sind und die mit den Graphitfolien verbunden werden können. Vorzugsweise bestehen diese Metallfolien aus der Gruppe folgender Metalle oder Metallegierungen, wenn diese Legierungen die vorgenannten Materialeigenschaften aufweisen: Nickel, Legierungen, in denen Nickel Hauptbestandteil ist, Eisen, Eisenlegierungen, in denen Eisen Hauptbestandteil ist, Edelstahl, Kupfer, Kupferlegierungen, in denen Kupfer Hauptbestandteil ist, Aluminium, Aluminiumlegierungen, in denen Aluminium Hauptbestandteil ist. Besonders bevorzugt ist die Verwendung von Metallfolien aus reinem Nickel, das vorzugsweise durch elektrolytische Abscheidung gewonnen wird oder aus korrosionsbeständigem Stahl. Der Vorteil der vorgenannten Metallfolien als Komponenten in Packungsmaterialien liegt außerdem, wie bei den Graphitfolien, in ihrer Beständigkeit gegenüber hohen und sehr hohen Betriebstemperaturen in Verbindung mit praktisch keinen Masseverlusten. Deshalb sind Packungen, die aus aus Graphit- und Metallfolien bestehenden Packungsgarnen gemäß dieser Erfindung hergestellt worden sind, auch unter extremen Betriebsbedingungen einsetzbar und sie zeigen auch unter solchen Betriebsbedingungen bei guten Kompressibilitäts- und Rückfederungseigenschaften keine oder nur geringe Setzungen.

Dort wo es die Einstellung bestimmter Eigenschaften, beispielsweise im Hinblick auf die Verarbeitungseigenschaften der Schichtstoffbänder oder der Gleiteigenschaften der Packungsgarne und der daraus hergestellten Packungen erfordert, können die Schichtstoffe und die aus diesen hergestellten Bänder auch eine oder mehrere Lagen aus Kunststoffolie(n) enthalten. Bevorzugt bestehen die dafür verwendeten Folien aus perfluorierten polymeren Kohlenwasserstoffen, aus Polyester oder aus Polyimid. Vorzugsweise werden hierbei Folien aus einem perfluorierten polymeren Kohlenwasserstoff verwendet. Die Kunststoffolien können in diesen Fällen sowohl direkt mit einer Flachseite einer Graphitfolie oder mit einer Flachseite einer Metallfolie verbunden sein. Es können auf diese Weise folgende Abfolgen von Folienlagen realisiert werden, wobei als Ausgangsoberfläche eine beliebige, dem Inneren des Schichtstoffs zugekehrte Flachseite einer Graphitfolie gewählt worden ist: (-)Graphitfolie-Metallfolie-Kunststoffolie-Graphitfolie-Metallfolie-; (-) Metallfolie-Graphitfolie-Kunststoffolie-Graphitfolie-Metallfolie; (-)Graphitfolie-Metallfolie-Kunststoffolie-Metallfolie-Graphitfolie-.

Bei allen diesen Varianten soll jede Graphitfolie eines gegebenen Schichtstoffes auf einer ihrer Flachseiten mit einer verstärkenden Metallfolie verbunden sein.

Nach einer anderen Variante der Erfindung kann das Packungsgarn aus mindestens zwei miteinander nach einem Garnherstellungsverfahren verbundenen, vorzugsweise verdrillten Bändern aus mindestens zwei verschiedenen Schichtstoffen bestehen. Der erste Typ von Bändern besteht dabei aus einem Schichtstoff aus mindestens einer Graphit- und mindestens einer Metallfolie wie er im Vorstehenden beschrieben worden ist und der andere Typ von Bändern besteht aus einem Schichtstoff aus mindestens einer Graphit- und mindestens einer Kunststoffolie, wobei die Kunststoffolie eine Zugfestigkeit von mindestens 25 MPa und einen E-Modul von mindestens 0,4 GPa hat. Der zweite Typ von Bändern wird aus solchen Schichtstoffen hergestellt, die in der zeitgleichen deutschen Patentanmeldung Nr. 198 28 789.5 beschrieben worden sind.

Die Metallfolien können mit den Graphitfolien durch Kleber oder ohne Verwendung von Klebern verbunden sein. Welche der möglichen Verbindungsarten im Einzelfall gewählt wird, muß vom Fachmann durch einfach durchzuführende Versuche ermittelt werden. Es können alle Kleber verwendet werden, die die Oberflächen der Graphitfolien und der Metallfolien benetzen. Die durch das Verkleben erzielte Verbindungsfestigkeit muß jedoch mindestens so stark sein, daß das Verarbeiten des durch das Verkleben hergestellten Schichtstoffes zu Bändern und das Weiterverarbeiten der Bänder zu den Packungsgarnen gewährleistet ist. Es können beispielsweise Kleber auf Acrylat-, Polyamid-, Polysiloxan-, Polyurethanbasis und acetylierte organische Polymere sowie Epoxidharz- und Phenolharzkleber verwendet werden. Packungen aus Packungsgarnen dieses Typs können beim Betrieb unter hohen Temperaturen ein geringes Setzen zeigen, das durch leichtes Nachspannen der Packungsbrille ausgeglichen werden kann.
Die Graphitfolien können mit den Metallfolien auch mit Hilfe des Verfahrens entsprechend EP 0 616 884 B1, das ohne Anwendung von Klebstoffen arbeitet, bei dem aber ein spezieller Haftvermittler eingesetzt wird, verbunden werden. Im Sinne der vorliegenden Erfindung soll dieses Verfahren zum Verbinden der Graphitfolien mit den Metallfolien auch als kleberfreies Verfahren gelten. Packungen aus Packungsgarnen dieses Typs sind wie die vorbeschriebenen Packungsgarne und Packungen korrosionsund hochtemperaturfest und sie zeigen auch bei sehr hohen Betriebstemperaturen praktisch keine Setzeigenschaften sowie nur einen vernachlässigbar geringen Masseverlust. Das Verbinden der Graphitfolien mit den Kunststoffolien kann gemäß der zeitgleichen deutschen Patentanmeldung Nr. 198 28 789.5 mit Hilfe der vorgenannten Klebstoffe durch Kleben oder kleberfrei durch Verschweißen bei Temperaturen, die nahe am oder im Erweichungsbereich der Kunststoffolien liegen und bei gleichzeitigem Anwenden eines moderaten Anpreßdruckes von mindestens 0,1 MPa und vorzugsweise von 0,5 bis 6 MPa oder mit Hilfe des Verfahrens entsprechend EP 0 616 884 B1, das ohne Anwendung von Klebstoffen arbeitet, bei dem aber ein spezieller Haftvermittler eingesetzt wird, verbunden werden. Die Metallfolien können mit den Kunststoffolien mit Hilfe der vorgenannten Kleber oder durch Verschweißen unter den vorgenannten Bedingungen verbunden werden. Es können auch bereits auf einer ihrer Flachseiten mit Kunststoff beschichtete Metallfolien bei der Herstellung der Schichtstoffe aus Graphit- und Metallfolien eingesetzt werden.

Die durch ein textiles Verarbeitungsverfahren wie beispielsweise Flechten oder insbesondere Verdrillen von zwei oder mehr Schichtstoffbändern erhaltenen Packungsgarne können direkt zu Packungen weiterverarbeitet werden. Sie können aber auch z.B. durch Verdrillen oder Flechten zunächst zu Packungsschnüren weiterverarbeitet werden, aus denen dann nach bekannten Methoden Packungen hergestellt werden. Statt Schichtstoffbänder mit im wesentlichen planen Oberflächen für die Garnherstellung einzusetzen, können solche Bänder mit planen Oberflächen vor dem Verdrillen oder Verflechten miteinander, zunächst jedes für sich allein verdrillt werden und es können dann solche bereits in sich verdrillten Bänder allein oder in Mischung mit vorher unverdrillten Bändern zu Packungsgarnen verarbeitet werden.

Wenn die Oberfläche der Packungsgarne nach ihrer Herstellung, beispielsweise durch Verdrillen oder Verflechten, nicht gleichmäßig genug ist, können sie vor dem Weiterverarbeiten noch kalibriert werden. Bei diesem Vorgang, der mit einer der bekannten Vorrichtungen durchgeführt werden kann, werden die Packungsgarne und in ihnen die Schichtstoffbänder weiter verdichtet und die Packungsgarne erhalten einen für die weitere Verwendung erforderlichen oder gewünschten Querschnitt, der vorzugsweise rund, elliptisch, oval, rechteckig oder quadratisch ist. Packungsgarne dieses Typs, die so kalibriert worden sind, sind besonders dann, wenn sie aus breiteren und/oder einer größeren Anzahl von Schichtstoffbändern aufgebaut sind, vergleichsweise steif. Man kalibriert Packungsgarne dieses Typs deshalb nur, wenn es erforderlich ist.

Im folgenden wird die Erfindung anhand von Ausführungsbeispielen weiter erläutert:

### Beispiel 1:

Eine 500 mm breite, 50 m lange und 0,2 mm dicke Graphitfolienbahn mit einer Rohdichte von 1,2 g/cm³ wurde in einem quasikontinuierlichen Verfahren in einer Kaschiermaschine (Fabrikat Billhöfer Maschinenfabrik, Nürnberg) auf einer ihrer Flachseiten mittels einer Kleberauftragswalze und einem Abstreifrakel mit einem wäßrigen Zweikomponenten-Acrylatkleber, der die durch die Rezeptur vorgeschriebene Menge Härter enthielt (Kleber und Härter von Fa. Morton International GmbH, Bremen) gleichmäßig beschichtet. Die mit dem härterhaltigen Kleber beschichtete Graphitfolienbahn wurde sodann auf der kleberhaltigen Seite in der gleichen Anlage mit einer ebenfalls 500 mm breiten und 13 µm dicken Nickelfolie (Reinstnickel, Lieferant INCO Alloys International, England) vollflächig bedeckt. Das aus der Graphit- und aus der Nickelfolie bestehende Folienpaket wurde dann über eine auf ca. 70°C temperierte Aushärtwalze geleitet und danach wurden die Folien mittels einer Andruckwalze mit der Graphitfolienbahn verklebt. Die so hergestellte Schichtstoffbahn wurde anschließend auf ihrer unbedeckten Nickelflachseite nach dem gleichen Verfahren mit einer zweiten, der vorbeschriebenen ersten Graphitfolie gleichen Graphitfolie verbunden, so daß als Endprodukt eine Schichtstoffbahn mit einer Gesamtlänge von 50 m, einer Breite von 500 mm und einer Gesamtdicke von ca. 0,4 mm mit folgendem Schichtstoffaufbau erhalten wurde: 1. Graphitfolie, 2. Nickelfolie, 3. Graphitfolie. Diese Schichtstoffbahn wurde dann in schmale Bänder von ca. 1 mm Breite zerteilt. Dazu wurde die 500 mm breite Bahn zunächst auf einer Längsschneidmaschine (Hersteller HSM, Bad Oeynhausen) zu Bändern von 50 mm Breite und dann auf einer Schneidemaschine mit Rollenmessern (Fa. JOMRO Textiltechnik GmbH, Eschwege) zu ca. 1 mm breiten Bändern geschnitten. Entsprechende Verfahren wurden auch in den folgenden Ausführungsbeispielen zum Zerteilen der Bahnen zu schmalen Schichtstoffbändern angewandt. Unmittelbar nach dem Längsschneiden wurden die schmalen Schichtstoffbänder durch ein Paar Prägewalzen geführt und dadurch auf beiden Seiten mit feinen Rillen versehen, die sich quer zur Längsrichtung der Bänder erstreckten (Querriffelung/ -Rillung). Zum Herstellen eines Packungsgarnes wurden sechs dieser 1,0 mm breiten Bänder aus dem Schichtstoff mittels einer Zwirnmaschine (Fa. ALLMA, Typ AZBT, Kempten) so zu einem Garn verdrillt, daß das Garn ca. 30 Wicklungen pro Meter Garnlänge aufwies. Bei Zugversuchen an dem fertigen Garn wurde eine Zerreißkraft von 68 N gemessen. Dabei betrug die Probenlänge 800 mm, die freie Einspannlänge 200 mm und die Abzugsgeschwindigkeit 50 mm/min. Die Messungen wurden mit einer Zugprüfmaschine der Firma Zwick, Ulm, unter Verwendung von Spannköpfen Typ 8314 (Hersteller, Zwick) durchgeführt. Dieses Verfahren zum Bestimmen der Reißfestigkeit der Garne wurde wie das nachfolgend beschriebene Verfahren zum Bestimmen des Masseverlustes auch für die unter den folgenden Ausführungsbeispielen beschriebenen Garne angewendet. Zum Bestimmen des Masseverlusts bei vergleichsweise hohen Temperaturen wurden ca. 1 m lange Abschnitte des Garnes in einem Umluftofen eine Stunde lang 300 °C heißer Luft ausgesetzt. Danach betrug der Masseverlust ca. 1,3 %. Nach weiterer, einstündiger Behandlung unter diesen Bedingungen lag der Masseverlust unter 0,25 %.

### Beispiel 2:

Die Schichtstoffbahn zum Herstellen von Bändern für das Weiterverarbeiten zu Packungsgarnen hatte in diesem Beispiel die folgende Abfolge von Lagen: 1. PTFE-Folie, 2. Graphitfolie, 3. Edelstahlfolie, 4. Graphitfolie, 5. PTFE-Folie. Ihre Herstellung wurde in diesem Fall in zwei voneinander verschiedenen Prozeßschritten durchgeführt. Im ersten Prozeßschritt wurde eine 1430 mm breite, 0,2 mm dicke Graphitfolie mit einer Rohdichte von 1,2 g/cm³ vollflächig mit einer ebenso breiten, 50 µm dicken PTFE-Folie, Typ TFM 1700, (Lieferer, Fa. Dyneon, Burgkirchen) bedeckt und mittels einer Doppelbandpresse verschweißt. Der Kissendruck der Presse betrug dabei 20 bar, die Kissentemperatur 370 °C und die Durchlaufgeschwindigkeit in der Presse 2 m/min. Auf diese Weise wurden zwei einseitig mit PTFE-Folie belegte Bahnen aus Graphitfolie hergestellt. Im zweiten Prozeßschritt wurden die beiden vorher hergestellten aus Graphit und PTFE bestehenden Verbundfolien an ihren freien Graphitflachseiten mit einer 25 µm dicken Edelstahlfolie (Werkstoff-Nr. 1.4401, Fa. Ugine, Frankreich) nach dem Verfahren gemäß EP 0 616 884 B1 verbunden. Dazu wurde die Edelstahlfolie zuerst durch ein Bad einer Haftvermittlerlösung aus einer Siloxan-Fettalkoholmischung (Lieferer, Wacker Chemie, München) gezogen und es wurde der auf beiden Seiten der Metallfolie befindliche Haftvermittler mittels Abstreifleisten und Verteilerrollen gleichmäßig in dünner Schicht auf beiden Flachseiten der Metallfolie verteilt und dann mittels eines Heizstrahlers getrocknet. Sodann wurde die Edelstahlfolie auf ihren beiden Flachseiten mit den Graphitflachseiten der beiden aus PTFE-Folie und Graphitfolie bestehenden, im ersten Prozeßschritt hergestellten Schichtstoffbahnen ganzflächig bedeckt und es wurden die übereinander befindlichen Lagen in einer Doppelbandpresse bei einer Temperatur von 170°C miteinander verbunden. Wie beim Verbinden der Graphitfolien mit den PTFE-Folien im ersten Prozeßschritt betrug der Kissendruck auch hier 20 bar und die Durchlaufgeschwindigkeit lag bei 2 m/min. Diese Mehrlagen-Schichtstoffbahn wurde wie in Ausführungsbeispiel 1 beschrieben, in zwei Stufen auf eine Bandbreite von 1,5 mm längs zerteilt. Die so erzeugten Bänder hatten eine Dicke von 0,5 mm. Drei derartiger Bänder wurden ohne Einbringen einer Querrillung oder -Riffelung aber im übrigen nach dem in Beispiel 1 beschriebenen Verfahren zu einem Packungsgarn verdrillt, das ca. 30 Umdrehungen pro laufendem Meter aufwies. Das Garn hatte eine Reißfestigkeit von 90 N. Sein Masseverlust nach einstündiger Behandlung bei 300°C in Luft im Umluftofen betrug weniger als 0,1 %.

### Beispiel 3:

In diesem Ausführungsbeispiel wurden drei 500 mm breite, 0,25 mm dicke und 50 m lange Graphitfolien, die eine Rohdichte von 1,0 g/cm³ hatten, mit zwei ebenfalls 500 mm breiten und 50 m langen aber 13 µm dicken Nickelfolien (Lieferer, Fa. INCO Alloys International, England) so miteinander verklebt, daß jede Flachseite der zwei Nickelfolien vollflächig von einer Graphitfolie bedeckt war. Dieser Laminiervorgang wurde quasikontinuierlich entsprechend dem in Beispiel 1 beschriebenen Verfahren mit Hilfe einer Kaschiermaschine (Fabrikat Billhöfer Maschinenfabrik, Nürnberg) jedoch unter Verwendung eines Polyamidklebers (AQ-Nylon, Lieferer, Fa. Toray, Japan) durchgeführt. Die so hergestellte Schichtstoffbahn mit der Schichtenabfolge Graphitfolie/Nickelfolie/Graphitfolie/Nickelfolie/Graphitfolie wurde nach der in Beispiel 1 beschriebenen Verfahrensweise in zwei Stufen zu Bändern mit einer Endbreite von 1,5 mm zerteilt. Diese Bänder hatten eine Dicke von ca. 0,7 mm. Die 1,5 mm breiten Bänder wurden im Anschluß an den letzten Schneidvorgang mittels Prägewalzen mit einer Querriffelung versehen. Danach wurden drei dieser Bänder mit der in Beispiel 1 bezeichneten Zwirnherstellmaschine zu einem Garn verdrillt, das 20 Umdrehungen pro laufenden Meter Garns aufwies. Die Reißfestigkeit dieses Garns betrug 42 N. Nach einstündiger Behandlung bei 300°C in Luft in einem Umluftofen betrug der Masseverlust 0,4 %.

### Beispiel 4:

In diesem Beispiel wurde unter prinzipieller Anwendung des in Beispiel 1 beschriebenen Verfahrens eine Schichtstoffbahn mit der Schichtenabfolge Graphitfolie/ Metallfolie/Graphitfolie hergestellt. Im Gegensatz zu Beispiel 1 wurde als Metallfolie hier jedoch eine 25 µm dicke Edelstahlfolie (Bezugsquelle, Fa. Ugine, Frankreich) und als Kleber der Polyamidkleber, der auch in Beispiel 3 verwendet worden ist, eingesetzt. Die Dicke jeder der beiden verwendeten Graphitfolien betrug 0,5 mm und ihre Rohdichte 1,0 g/cm³. Nach dem Zusammenfügen der drei Folienbänder stand eine Schichtstoffbahn mit einer Länge von 50 m, einer Breite von 500 mm und einer Dicke von 1 mm zur Verfügung. Sie wurde gemäß der vorbeschriebenen Verfahrensweise zu 2,5 mm breiten Bändern zerteilt. Diese Bänder wurden sodann durch zwei Prägewalzen geführt und dadurch mit einer Querriffelung versehen. Dann wurden jeweils zwei der geriffelten Bänder mittels der Zwirnmaschine zu einem Packungsgarn verdrillt, das 20 Umdrehungen pro laufendem Meter aufwies. Die mittlere Reißfestigkeit dieses Garns lag bei 76 N und der Masseverlust nach einstündiger Behandlung im Umluftofen bei Luft betrug 0,4 Prozent.

Alle der nach den Beispielen 1 bis 4 hergestellten Packungsgarne ließen sich nach den üblichen Verfahren zu Packungsschnüren verdrillen oder verflechten und es konnten auch direkt Packungen aus ihnen gewickelt werden.

Nachfolgend wird der generelle Herstellungsgang eines Packungsgarnes anhand des in Tabelle 1 wiedergegebenen Schemas, das die Herstellung eines aus Graphitfolien und Metallfolien bestehenden Packungsgarnes wiedergibt, beschrieben.

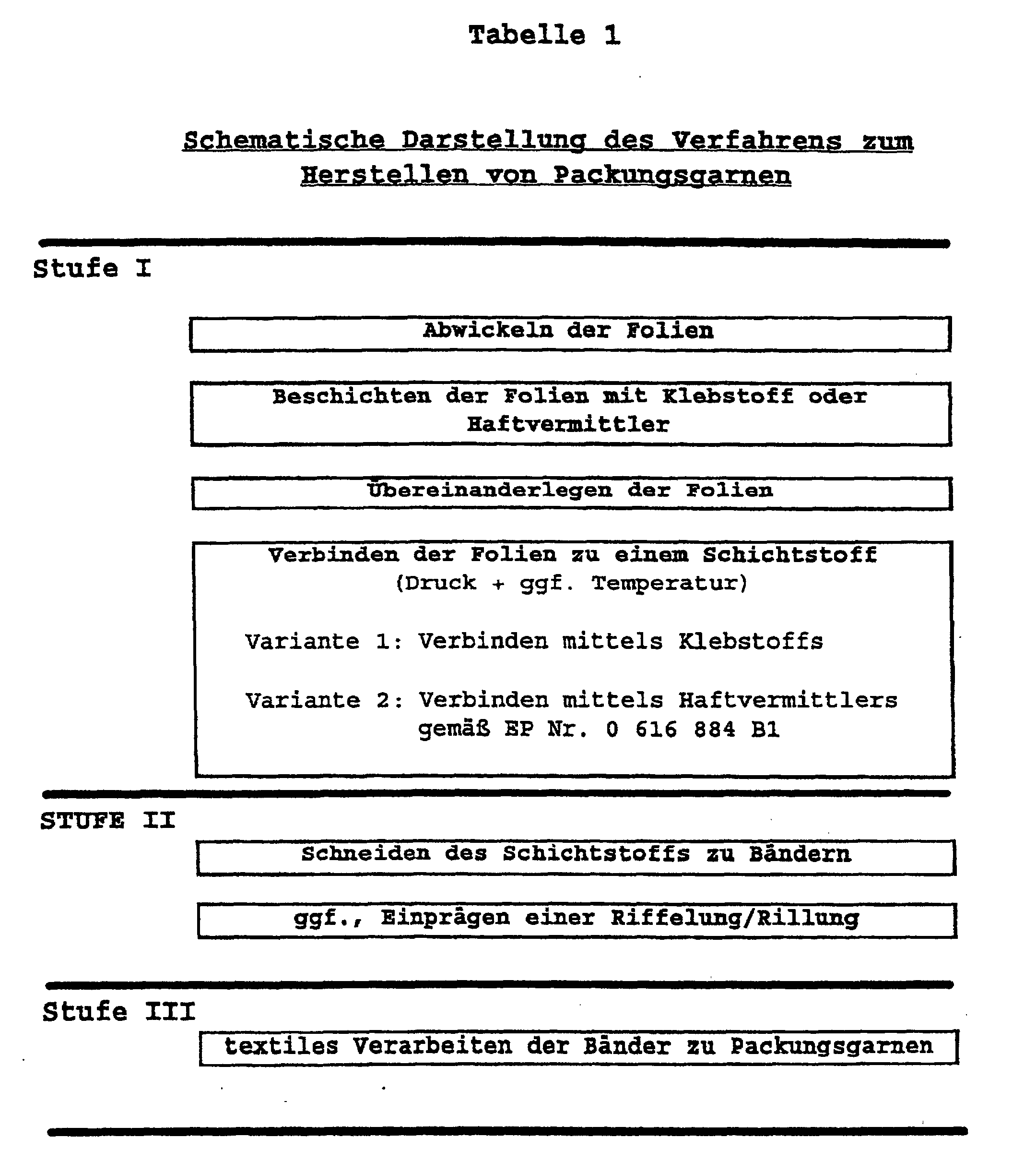

Generell besteht der Herstellungsgang aus drei Stufen: In einer ersten Verfahrensstufe wird ein Schichtstoff hergestellt, aus dem in einer zweiten Verfahrensstufe Bänder produziert werden, die in einer dritten Verfahrensstufe zu einem Packungsgarn verarbeitet werden.
In der ersten Verfahrensstufe werden Lagen aus Graphitfolie im regelmäßigen Wechsel mit Lagen der verstärkenden Metallfolie so übereinander angeordnet, daß sich die Lagen aus den verschiedenen Folienarten stets vollständig bedecken. Zweckmäßigerweise werden dazu die Metall- und die Graphitfolien von Rollen abgewickelt und, ohne sie zu Stücken bestimmter Länge zu zerschneiden, in einem kontinuierlichen Verfahren weiterverarbeitet. Sie können jedoch auch in Bahnen bestimmter Länge geschnitten werden und diskontinuierlich oder quasi diskontinuierlich zu Packungsgarnen weiterverarbeitet werden. Letzteres Verfahren wird für das Herstellen von Packungsgarnen in größerem Maßstab jedoch seltener angewandt.

Falls die Folienlagen mittels eines Klebstoffes miteinander verbunden werden sollen, muß vor dem Aufeinanderlegen mindestens eine der zwei Folienflächen, die miteinander verbunden werden sollen, mit dem Klebstoff versehen werden. Der Klebstoff muß möglichst dünn auf die Flächen aufgetragen werden. Als Klebstoffe eignen sich vorzugsweise Kleber aus der Gruppe Acrylate, Polysiloxane, Polyurethane, Polyamide, acetylierte organische Polymere, Epoxid- und Phenolharze. Zum Verbinden wird das Folienpaket einem Druck von mindestens 0,1 MPa, und von höchstens 5 MPa und bei Verwendung von thermisch härtbaren Klebern zusätzlich der erforderlichen Temperatur ausgesetzt. Wenn das Verbinden nach dem Verfahren gemäß EP 0 616 884 B1 geschehen soll, wird auf mindestens eine der zu verbindenden Folien eine die Haftung vermittelnde Substanz aufgetragen. Beim Auftragen muß jedoch auf das Erzeugen einer sehr dünnen Schicht der die Haftung vermittelnden Substanz und auf deren besonders gleichmäßige Verteilung geachtet werden. Das Verbinden selbst wird unter einem Druck von mindestens 0,5 MPa und einer Mindesttemperatur von 130 °C durchgeführt.

Wenn gemäß einer der Varianten der Erfindung Schichtstoffe hergestellt werden sollen, in denen zusätzlich zu den zum Zwecke der Verstärkung miteinander verbundenen Graphit- und Metallfolien Flachseiten von Graphit- oder Metallfolien mit Kunststoffolien verbunden sind, werden im Prinzip die gleichen Verbindungstechniken wie sie vorstehend für die Graphit- und Metallfolien beschrieben worden sind, angewandt. Allerdings ist es bei diesen Varianten zusätzlich möglich, die Kunststoffolien mit den Graphitoder den Metallfolien zu verschweißen. Dabei werden die zu verbindenden Folien ohne Belegen der zu verbindenden Oberflächen mit einem Klebstoff oder Haftvermittler bei den erforderlichen Temperatur- und Druckbedingungen verbunden. Beim Verbinden der Graphit- oder Metallfolien mit hochwertigen Polyesterfolien wendet man Temperaturen im Bereich von 240 bis 270 °C und einen Druck von mindestens 0,1 MPa, vorzugsweise von 3 MPa an. Wenn die Graphit- oder Metallfolien mit Kunststoffolien aus der Gruppe Polyimid und perfluorierten polymeren Kohlenwasserstoffen verbunden werden sollen, sind Temperaturen im Bereich von 350 bis 380 °C und es ist ein Druck von mindestens 0,1 MPa, bevorzugt von 2 bis 3 MPa erforderlich.

Die in Verfahrensstufe 1 hergestellten Schichtstoffe werden in Verfahrensstufe 2 mittels Schneideinrichtungen wie beispielsweise Rollenmessersätzen längs zu Schichtstoffbändern von einer Breite geschnitten, die für das Weiterverarbeiten in Verfahrensstufe 3 erforderlich ist. Die so hergestellten Bänder können entweder direkt im kontinuierlichen Verfahren weiterverarbeitet werden oder sie werden einzeln oder zu mehreren zusammengefaßt auf Spulen aufgewickelt. Um den Schichtstoffbändern für das Verarbeiten zu Packungsgarnen durch ein textiles Verfahren eine hinreichende Flexibilität zu verleihen, werden entweder die Schichtstoffe vor dem Zerteilen zu Bändern oder, vorzugsweise, die Bänder selbst mit einer Riffelung oder Rillung versehen, die quer zur Längserstreckung der Bänder verläuft. Dies kann mit bekannten Prägemaschinen oder Prägewerkzeugen wie beispielsweise Prägewalzen geschehen.

In Verfahrensstufe 3 werden die in Verfahrensstufe 2 hergestellten Bänder nach einem der bekannten Verfahren zu Packungsgarnen verarbeitet. Vorzugsweise bedient man sich hierbei des Verdrillens. Wo dies jedoch erforderlich ist, kann auch verflochten oder ein anderes Verfahren angewandt werden. Zum Herstellen von sogenannten Hybridgarnen, das sind im Sinne der Erfindung Garne, die aus unterschiedlich aufgebauten Schichtstoffen zusammengesetzt sind, werden zum einen Bänder, die im wesentlichen aus Graphit- und Metallfolien und zum zweiten Bänder, die aus Graphit- und Kunststoffolien bestehen, in bestimmten Verhältnissen und/oder Anordnungen beim Herstellen zusammengeführt und zu Packungsgarnen verarbeitet. Auf diese Weise können die Eigenschaften solcher Hybridgarne je nach Anzahl und Zusammensetzung der in ihnen vorhandenen Bänder gezielt eingestellt werden.
Die so hergestellten Packungsgarne werden im allgemeinen direkt zu Packungsschnüren oder anderen Vorprodukten für das Herstellen von Packungen oder auch direkt zu Packungen weiterverarbeitet. Wo dies gewünscht oder notwendig ist, können die Packungsgarne noch auf einen bestimmten Querschnitt kalibriert werden. Die Oberflächen der Packungsgarne werden dadurch geglättet und die Garne selbst weiter verdichtet. Allerdings verlieren sie dadurch einen Teil ihrer Flexibilität.

Im Folgenden wird die Erfindung anhand von Figuren in lediglich schematischer, nicht maßstabgetreuer Darstellung beispielhaft weiter beschrieben.

Es zeigen:
Figur 1: Die schematische Darstellung eines kontinuierlichen oder teilkontinuierlichen Verfahrens zum Herstellen von erfindungsgemäßen Packungsgarnen.
Figur 2: Einen Querschnitt durch ein Schichtstoffband aus einer Lage flexiblen Graphits und einer Metallfolie. Die Verbindung zwischen den Komponenten wurde mittels eines Haftvermittlers hergestellt.
Figur 3: Einen Querschnitt durch ein Schichtstoffband aus zwei Lagen flexiblen Graphits und drei Metallfolien. Die Folien sind miteinander verklebt.
Figur 4: Einen Querschnitt durch ein Schichtstoffband aus drei Lagen flexiblen Graphits zwischen denen sich zwei Lagen Metallfolien befinden, die mit den Graphitlagen durch einen Kleber verbunden sind.
Figur 5: Einen Querschnitt durch ein Schichtstoffband aus einer Lage flexiblen Graphits und einer Lage Metallfolie, bei dem die beiden äußeren Flachseiten mit je einer Kunststoffolie verbunden sind.
Figur 6: Einen Querschnitt durch ein Schichtstoffband aus zwei Lagen flexiblen Graphits, zwei Lagen Metallfolien und zwei Lagen Kunststoffolien, in dem je eine der Lagen der Metall- und Kunststoffolie, im Inneren angeordnet ist und sich die zwei anderen Lagen der Kunststoff- und der Metallfolien auf den äußeren Flachseiten des Schichtstoffbandes befinden.
Figur 7: Die Querschnittsdarstellung eines Packungsgarnes, das aus Bändern zweier verschiedener Schichtstoffe, nämlich erstens aus einem Band aus Graphit- und Metallfolien und zweitens aus einem Band aus Graphit- und Kunststoffolien aufgebaut ist.

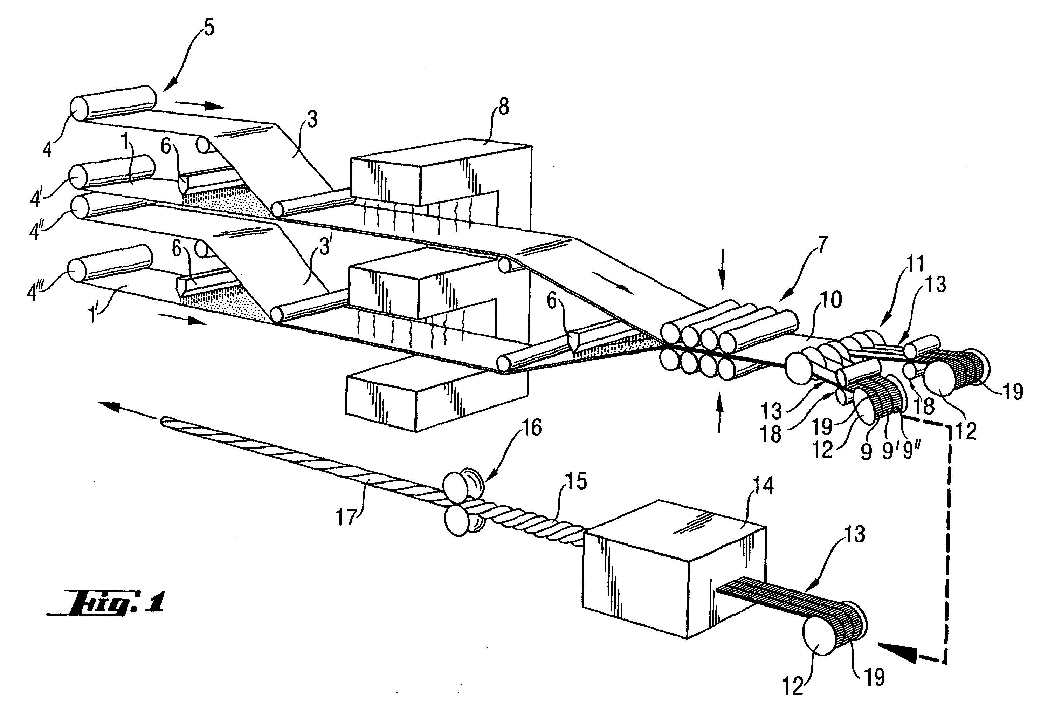

Beim bevorzugt angewandten kontinuierlichen oder teilkontinuierlichen Verfahren gemäß Figur 1 werden die Graphitfolien 1, 1' und die Metallfolien 3, 3', die miteinander verbunden werden sollen, von Rollen 4, 4', 4'', 4''', die in einem Rollengestell 5 in geeigneter Weise angeordnet sind, simultan so abgerollt, daß die Folien 1, 1', 3, 3' genau übereinander gelegt und miteinander verbunden werden können. Für den Fall, daß das Verbinden durch Verkleben oder nach dem Verfahren gemäß EP 0 616 884 B1 durchgeführt werden soll, muß vor dem Übereinanderlegen der Folien 1, 1', 3, 3' mindestens eine der zwei jeweils miteinander zu verbindenden Oberflächen mit einem dünnen Belag Klebstoffs oder Haftvermittlers belegt werden. Dies kann beispielsweise durch Sprüh- oder Wischeinrichtungen 6 oder durch Auftragewalzen oder Kombinationen davon geschehen. Wo es die Konsistenz des Klebers oder Haftvermittlers zuläßt, kann das Auftragen auch durch Tauchen geschehen, das hier nicht dargestellt worden ist. Beim ebenfalls nicht wiedergegebenen Verbinden durch Verschweißen, das nur für die Varianten in Frage kommt, bei denen zusätzlich bestimmte Flachseiten der aus Graphit- und Metallfolien bestehenden Schichtstoffe mit Kunststoffolien verbunden werden sollen, entfallen derartige Auftragsvorrichtungen. Das Verbinden der Graphit- mit den Metallfolien geschieht auf Walzenstühlen oder Bandpressen 7, die entweder, wo dies notwendig ist, selbst heizbar sind oder vor denen eine Heizeinrichtung 8 wie z.B. ein Ofen angeordnet ist, mittels der die Folien 1, 1', 3, 3' oder die Gelege aus den Folien 1, 3, 1', 3' auf die zum Verbinden erforderliche Temperatur aufgeheizt wird. Für das nicht wiedergegebene Herstellen von Schichtstoffen aus einer größeren Anzahl Lagen aus Graphit- und Metallfolien oder, wo dies aus anderen Gründen sachdienlich ist, wie beispielsweise beim zusätzlichen Einbringen von Kunststoffolien in den Schichtstoff, können auch in einem vorgeschalteten Produktionsschritt Schichtstoffe aus wenigen Folienlagen hergestellt werden und es kann dann durch Verbinden solcher vorfabrizierter Schichtstoffe der zum Weiterverarbeiten zu den Bändern bestimmte Schichtstoff gefertigt werden.
Zum Herstellen der Bänder 9, 9', 9'' aus den Schichtstoffen 10 aus Graphit- 1, 1' und Metallfolien 3, 3' wird der jeweilige Schichtstoff 10 in der gemäß Tabelle 1 zweiten Verfahrensstufe mittels üblicher Schneideinrichtungen 11 in Längsrichtung zu Bändern 9, 9', 9'' der gewünschten Breite, die vorteilhafterweise unter 5 mm liegt, geschnitten. Bei der kontinuierlichen Verfahrensweise ist dieser Schneidvorgang mit dem vorhergehenden Prozeß des Herstellens des Schichtstoffes 10 aus den Folien 1, 1', 3, 3' direkt gekoppelt. Aus praktischen Gründen kann das Zerteilen der Schichtstoffbahnen zu Bändern mit der für das Herstellen der Garne gewünschten Breite, besonders bei Vorliegen von Schichtstoffen größerer Breite in zwei Stufen geschehen: Zuerst wird die Schichtstoffbahn in Breiten mittlerer Größe zerteilt und es werden dann diese Bahnen mittlerer Breite auf die gewünschte endgültige Breite der Bänder zugeschnitten. Letzteres Verfahren ist in Figur 1 nicht dargestellt. Das Zerschneiden geschieht mit üblichen Schneideinrichtungen 11, bevorzugt kontinuierlich mit Hilfe von Messerwalzen. Vorzugsweise werden die Schichtstoffe 10 vor dem Zerteilen zu Bändern 9, 9', 9'' oder die bereits auf eine Zwischenbreite oder die auf die Endbreite zerteilten Bänder 9, 9', 9'' durch eine Prägevorrichtung mit mindestens einer entsprechend ausgerüsteten Prägewalze (18) geführt und dadurch mit einer quer zu ihrer Längserstreckung verlaufenden Riffelung 19 oder Rillung 19 versehen. In Figur 1 ist diese Prägewalze 18 gemäß der bevorzugten Verfahrensweise nach der Schneideinrichtung 11 angeordnet. Die so erzeugten Bänder 9, 9', 9'' werden entweder auf Spulen 12 aufgewickelt, um in einem nachfolgenden, abgekoppelten Verfahrensschritt weiterverarbeitet zu werden oder sie werden, und dies ist in Figur 1 ebenfalls nicht wiedergegeben, direkt in einem kontinuierlichen Verfahren in der gemäß Tabelle 1 dritten Verfahrensstufe zu der für das nachfolgende textile Verarbeiten durch Verflechten, Verstricken oder bevorzugt, durch Verdrillen erforderlichen Anzahl von Bändern zusammengefaßt und zu einem Packungsgarn 15 verarbeitet. Wenn das textile Verarbeiten durch Verdrillen geschehen soll, ist es vorteilhaft, bereits nach dem Schneiden die für das Verdrillen benötigte Anzahl an Bändern 9, 9', 9'' auf eine, gegebenenfalls entsprechend unterteilte Spule 12 aufzuwickeln. Beim Verdrillen muß dann nur mehr der aus der vorgegebenen Anzahl an Bändern 9, 9', 9'' bestehende Strang 13 von der Spule 12 abgezogen und verdrillt werden. Das Verdrillen geschieht mittels Vorrichtungen 14 wie sie beispielsweise zum Herstellen von Seilen oder Garnen gebräuchlich sind. Aus den so hergestellten Packungsgarnen 15 werden dann Packungen hergestellt. In speziellen Fällen können die nach dem textilen Verbinden der Bänder 9, 9', 9'' erhaltenen Packungsgarne 15 jedoch noch mit Hilfe üblicher, bekannter Vorrichtungen 16 zu Packungsgarnen 17 mit streng definierter Oberflächenkontur und einem bestimmten Garnquerschnitt kalibriert werden. Die Garne verlieren dadurch jedoch einen Teil ihrer Flexibilität.

Der Querschnitt durch ein Schichtstoffband in Fig. 2 zeigt eine Lage aus 0,5 mm dickem flexiblem Graphit 1 mit einer Rohdichte von 1,0 g/cm³, die auf einer ihrer Flachseiten mittels des Verfahrens entsprechend dem Europäischen Patent Nr. 0 616 884 B1 unter Verwendung einer Siloxan-Fettalkohol- Mischung als haftvermittelnder Substanz mit einer 25 µm dicken Folie 3 aus Elektrolytnickel verbunden worden ist. Die andere Flachseite der Graphitfolie 1 ist frei von jedem Belag.

Figur 3 stellt einen Querschnitt durch ein Schichtstoffband aus zwei 0,5 mm dicken Graphitfolien 1, 1' mit einer Rohdichte von 1,0 g/cm³ und drei 35 µm dicken Metallfolien 3, 3', 3'' aus Elektrolytkupfer dar. Die Graphitfolien 1, 1' sind mit den Metallfolien 3, 3', 3'' mittels eines Epoxidharzklebers 2, 2', 2'', 2''' verbunden. In diesem Schichtstoffband sind die beiden äußeren Flachseiten der Graphitfolien 1, 1' mit einer Metallfolie 3, 3'' belegt.

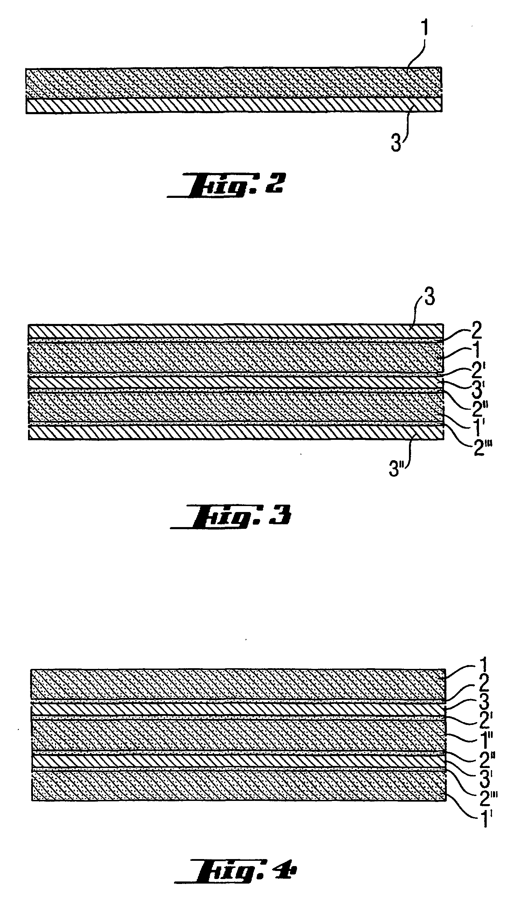

Figur 4 veranschaulicht einen Querschnitt durch ein Schichtstoffband aus einer oberen 1, einer mittleren 1'' und einer unteren 1' Lage aus 0,20 mm dicker Graphitfolie mit einer Rohdichte von 1,2 g/cm³ und zwei 50 µm dicken Folien 3, 3' aus Reinstaluminium. Die Metallfolien 3, 3' befinden sich zwischen den Graphitfolien 1, 1', 1'' und sind mit diesen durch einen Acrylatkleber 2, 2', 2'', 2''' verbunden. Demgemäß sind die beiden nach außen weisenden Flachseiten der Graphitfolien 1, 1' ohne Belag.

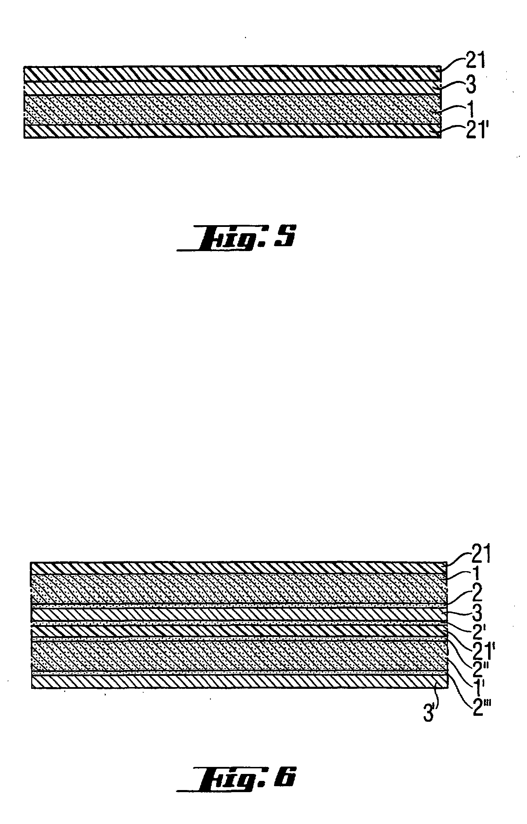

In Figur 5 ist ein Typ eines Schichtstoffbandes im Querschnitt dargestellt, der zusätzlich zu einer Graphit- 1 und einer Metallfolie 3, die hier aus Edelstahl besteht, noch zwei Kunststoffolien 21, 21' aus Polytetrafluorethylen (PTFE) enthält. Die obere 21 und die untere 21' PTFE Folie ist mit der jeweils darunter befindlichen Unterlage 3, 1 aus der Metallfolie 3 und der Graphitfolie 1 kleberfrei verschweißt. Die obere Kombination aus der PTFE-Folie 21 und der mit ihr verbundenen Metallfolie 3 wurde genauso wie die untere Kombination aus der Graphitfolie 1 und der PTFE-Folie 21' in separaten Produktionsschritten hergestellt. Danach wurden die beiden Kombinationen an ihren von Kunststoffolien freien Flachseiten nach dem Verfahren gemäß dem Europäischen Patent Nr. 0 616 884 B1 ganzflächig verbunden. Eine solche Verfahrensweise kann in geeigneter Weise abgewandelt und auch für das Herstellen anders aufgebauter Schichtstoffe angewandt werden. Sie ist auch besonders für das Herstellen von Schichtstoffen aus vielen Lagen Graphit-, Metall- und, gegebenenfalls, Kunststoffolie geeignet. Die Graphitfolie 1 hat eine Dicke von 0,5 mm und eine Rohdichte von 1,2 g/cm³. Die Metallfolie hat eine Dicke von 25 µm und die PTFE-Folien eine Dicke von 30 µm. Derartige Schichtstoffbänder haben, besonders wenn sie mit einer Riffelung versehen worden sind, sehr gute Verarbeitungseigenschaften und die aus ihnen hergestellten Packungen haben sehr gute Dichteigenschaften, sind korrosionsfest, temperaturbeständig und gleitfähig.

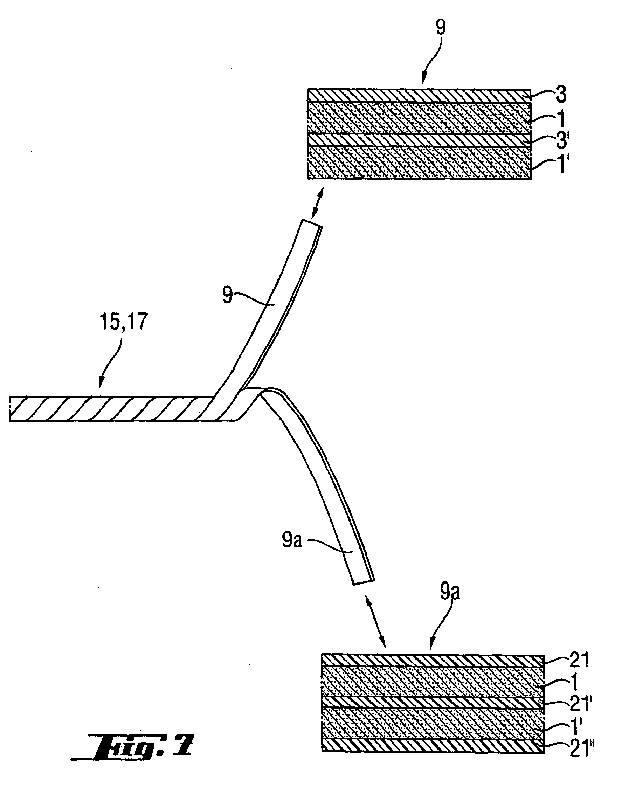

Figur 6 gibt einen Querschnitt durch ein Schichtstoffband wieder, das aus zwei Graphitfolien 1, 1' mit einer Dicke von 0,38 mm und einer Rohdichte von 1,1 g/cm³, zwei Metallfolien 3, 3' und aus zwei Kunststoffolien 21, 21' besteht. Eine 21 der Kunststoffolien 21, 21' besteht aus PTFE, bildet eine Außenfläche des Schichtstoffbandes und ist mit der Graphitfolie 1 verschweißt. Sie ist 50 µm dick. Die andere Kunststoffolie 21' ist 12 µm dick und besteht aus Polyester. Sie 21' ist im Inneren des Schichtstoffbandes zwischen einer Metallfolie 3 aus 50 µm dickem Reinstaluminium und der Graphitfolie 1' angeordnet und mit diesen Folien 3, 1' mittels eines Acrylatklebers 2', 2'' verbunden. Eine 3' der zwei Metallfolien 3, 3' bildet die zweite äußere Flachseite des Schichtstoffbandes. Sie besteht aus Reinnickel, ist 13 µm dick und ist mit ihrer Unterlage aus einer Graphitfolie 1' mit einem Acrylatkleber 2''' verbunden. Mit dem gleichen Kleber 2 sind auch die Graphitfolie 1 mit der Aluminiumfolie 3 verbunden.

Figur 7 verdeutlicht im Querschnitt den Aufbau eines in einer Draufsicht wiedergegebenen Packungsgarnes 15, 17, das aus zwei verschiedenen Typen von Schichtstoffbändern 9, 9a, nämlich erstens aus einem Schichtstoffband 9 aus mindestens einer Graphitfolie 1, ... und mindestens einer Metallfolie 3, ... und zweitens aus einem Schichtstoffband 9a aus mindestens einer Graphitfolie 1, ... und mindestens einer Kunststoffolie 21, ... besteht (Hybridgarn). Im vorliegenden Fall sind zwei 9, 9a solcher Bänder zu einem Packungsgarn verdrillt. Das eine Schichtstoffband 9 besteht aus zwei Graphitfolien 1, 1' und zwei Metallfolien 3, 3' aus Elektrolytnickel, die alternierend angeordnet und gemäß dem Verfahren nach dem Europäischen Patent Nr. 0 616 884 B1 unter Verwendung eines Siloxan-Fettalkohol-Gemisches als Haftvermittler miteinander verbunden sind. Das andere Schichtstoffband 9a besteht aus zwei Graphitfolien 1, 1', von denen jede 1, 1' auf ihrer äußeren Flachseite mit einer Kunststoffolie 21, 21'' aus PTFE verschweißt ist. Im Inneren des Schichtstoffs 9a befindet sich eine dritte Kunststoffolie 21' aus Polyimid, die zwischen den beiden Graphitfolien 1, 1' angeordnet und mit jeder 1, 1' von diesen verschweißt ist. Auch auf diese Weise lassen sich Packungsgarne und aus diesen, Packungen mit speziellen Verarbeitungs- und Gebrauchseigenschaften schaffen.

Es ist unschwer zu erkennen, daß noch eine Vielzahl von möglichen Schichtstoffen in Abwandlung der durch die Figuren 2 bis 7 angegebenen Ausführungsformen nach der Lehre der Erfindung gebildet werden können. Demgemäß ist die Erfindung nicht auf die in den Figuren dargestellten Ausführungsformen beschränkt. Es sollen deshalb auch, im Rahmen des durch die Patentansprüche bestimmten Schutzbereichs, die nicht dargestellten Schichtstoffe in diese Patentanmeldung eingeschlossen sein, die der Fachmann aufgrund der ihm durch diese Offenbarung gebotenen Informationen herstellen und die er zu Packungsgarnen weiterverarbeiten könnte.

### Bezugszeichenliste

- 1;1';1'';1''': Lagen aus flexiblem Graphit
- 2;2';2'';2''': Klebstoff oder Haftvermittler entsprechend EP-Patent Nr.0 616 884 B1
- 3;3';3'': Metallfolie
- 4;4';4'';4''': Rollen (in Rollengestell)
- 5: Rollengestell
- 6: Bürsten oder Sprüheinrichtungen zum Auftragen von Klebstoff
- 7: Presse
- 8: Heizeinrichtung
- 9;9';9'': Bänder aus Schichtstoff
- 9a: Schichtstoffband aus Graphit- und Kunststoffolie
- 10: Schichtstoff, aus Folien (1;1';3;3') hergestellt
- 11: Schneideinrichtung
- 12: Spule/n zum Aufwickeln von Bändern
- 13: Strang aus drei Bändern
- 14: Verdrillvorrichtung
- 15: Packungsgarn, nicht kalibriert
- 16: Kalibriervorrichtung
- 17: Packungsgarn kalibriert
- 18: Prägewalze zum Einbringen der Riffelung
- 19: Riffelung oder Rillung
- 21;21';21'': Kunststoffolie

## Patentansprüche

1. Packungsgarn aus mindestens zwei nach einem Garnherstellungsverfahren miteinander verbundenen Bändern aus einem Schichtstoff, der aus alternierend angeordneten Schichten von mindestens zwei flächigen Werkstoffen, die miteinander verbunden sind, besteht und zwar erstens, aus mindestens einer Lage aus flexiblem Graphit und zweitens, mindestens einer Lage eines verstärkenden Mittels,
- wobei entweder beide äußeren Flachseiten der oberen und der unteren Schicht des Schichtstoffes aus flexiblem Graphit oder nur eine dieser Flachseiten aus flexiblem Graphit oder keine dieser Flachseiten aus flexiblem Graphit besteht,
**dadurch gekennzeichnet, daß**
die Bänder aus Schichtstoff (9,9',9'') eine Breite von nicht mehr als 5 mm aufweisen und aus Lagen flexiblen Graphits (1,1',1''), der eine Dicke von nicht mehr als 1 mm und eine Rohdichte im Bereich von 0,7 bis 1,8 g/cm³ aufweist
und aus Lagen von Metallfolien (3,3',3'') aus der Gruppe Nickel, Nickellegierungen, Eisen, Eisenlegierungen, Stahl, Edelstahl, Kupfer, Kupferlegierungen, Aluminium, Aluminiumlegierungen mit einer Dicke im Bereich von 5 bis 50 µm und mit einer Zugfestigkeit von mindestens 250 MPa bestehen.

2. Packungsgarn aus mindestens zwei nach einem Garnherstellungsverfahren miteinander verbundenen Bändern aus einem Schichtstoff, der aus einer Lage aus flexiblem Graphit, die auf mindestens einer ihrer beiden Flachseiten mit mindestens einem verstärkenden Mittel verbunden ist, besteht,
**dadurch gekennzeichnet, daß**
die Bänder aus Schichtstoff (9,9',9'') eine Breite von nicht mehr als 5 mm aufweisen und aus einer Lage flexiblen Graphits (1), der eine Dicke von nicht mehr als 1 mm und eine Rohdichte im Bereich von 0,7 bis 1,8 g/cm³ aufweist
und aus mindestens einer Lage einer Metallfolie (3,3') aus der Gruppe Nickel, Nickellegierungen, Eisen, Eisenlegierungen, Stahl, Edelstahl, Kupfer, Kupferlegierungen, Aluminium und Aluminiumlegierungen besteht, wobei die Metallfolie (3,3') eine Dicke im Bereich von 5 bis 50 µm und eine Zugfestigkeit von mindestens 250 MPa aufweist.

3. Packungsgarn nach Patentanspruch 1 oder 2
**dadurch gekennzeichnet, daß**
die Bänder aus Schichtstoff (9,9',9'') zusätzlich mindestens eine Kunststoffolie (21,21',21'') enthalten.

4. Packungsgarn nach Patentanspruch 3
**dadurch gekennzeichnet, daß**
die Bänder aus Schichtstoff (9,9',9'') zusätzlich mindestens eine Kunststoffolie (21,21',21'') aus einem Fluorpolymeren enthalten.

5. Packungsgarn nach einem der Patentansprüche 1 bis 4,
**dadurch gekennzeichnet, daß**
die Metallfolie (3,3',3'') aus reinem Nickel oder korrosionsbeständigem Stahl besteht.

6. Packungsgarn nach einem oder mehreren der Patentansprüche 1 bis 5,
**dadurch gekennzeichnet, daß**
die Bänder aus Schichtstoff (9,9',9'') quer zu ihrer Längserstreckung geriffelt sind.

7. Packungsgarn nach einem oder mehreren der Patentansprüche 1 bis 6,
**dadurch gekennzeichnet, daß**
das Packungsgarn (15,17) aus mindestens zwei Bändern (9,9',9'') besteht, von denen mindestens eins vor dem Verarbeiten der mindestens zwei Bänder (9,9',9'') zu einem Packungsgarn (15,17) für sich verdrillt worden ist.

8. Packungsgarn nach einem oder mehreren der Patentansprüche 1 bis 7,
**dadurch gekennzeichnet, daß**
die Bänder aus dem Schichtstoff (9,9',9'') eine Breite von nicht mehr als 3 mm und die in den Bändern (9,9',9'') befindlichen Graphitfolien (1,1',1'') eine Dicke von nicht mehr als 0,5 mm haben.

9. Packungsgarn nach einem oder mehreren der Patentansprüche 1 bis 7,
**dadurch gekennzeichnet, daß**
die Bänder aus dem Schichtstoff (9,9',9'') eine Breite von nicht mehr als 2 mm und die in den Bändern (9,9', 9'') befindlichen Graphitfolien (1,1',1'') eine Dicke von nicht mehr als 0,35 mm haben.

10. Packungsgarn nach einem oder mehreren der Patentansprüche 1 bis 9,
**dadurch gekennzeichnet, daß**
die die Folien oder Bänder aus flexiblem Graphit (1,1', 1'') mindestens eine verstärkende Metallfolie (3,3',3'') eine Dicke im Bereich von 10 bis 30 µm hat.

11. Packungsgarn nach einem oder mehreren der Patentansprüche 1 bis 10,
**dadurch gekennzeichnet, daß**
mindestens eine der zwei nach außen weisenden Flachseiten der die Bänder aus dem Schichtstoff (9,9',9'') nach oben und unten begrenzenden Folien von einer Kunststoffolie (21,21',21'') aus der Gruppe perfluorierte polymere Kohlenwasserstoffe, Polyester, Polyimid bedeckt und mit dieser verbunden ist.

12. Packungsgarn nach einem oder mehreren der Patentansprüche 1 bis 11,
**dadurch gekennzeichnet, daß**
der flexible Graphit (1,1',1'') einen Kohlenstoffgehalt von mindestens 96 Gew.-% hat.

13. Packungsgarn nach Patentanspruch 12,
**dadurch gekennzeichnet, daß**
der flexible Graphit (1,1',1'') einen Kohlenstoffgehalt von mindestens 99 Gew.-% hat.

14. Packungsgarn nach einem oder mehreren der Patentansprüche 1 bis 13,
**dadurch gekennzeichnet, daß**
die verstärkend wirkende Metallfolie (3,3',3'') mit dem flexiblen Graphit (1,1',1'') durch einen Kleber (2, 2', 2'', 2''') verbunden ist.

15. Packungsgarn nach einem oder mehreren der Patentansprüche 1 bis 13,
**dadurch gekennzeichnet, daß**
die verstärkend wirkende Metallfolie (3,3',3'') mit dem flexiblen Graphit (1,1',1'') ohne Verwendung eines Klebers verbunden ist.

16. Packungsgarn nach Patentanspruch 15,
**dadurch gekennzeichnet, daß**
die verstärkend wirkende Metallfolie (3,3',3'') mit dem flexiblen Graphit (1,1',1'') nach dem Verfahren gemäß EP 0 616 884 B1 verbunden ist.

17. Packungsgarn aus mindestens zwei nach einem Garnherstellungsverfahren miteinander verbundenen Bändern aus einem Schichtstoff,
**dadurch gekennzeichnet, daß**
es aus mindestens zwei miteinander nach einem Garnherstellungsverfahren miteinander verbundenen Bändern (9,9',9'',9a), die aus mindestens zwei voneinander verschiedenen Schichtstoffen (9,9a), nämlich erstens aus einem Schichtstoff (9,9',9'') aus mindestens einer Folie aus flexiblem Graphit (1,1',1'') und mindestens einer Folie aus Metall (3,3',3'') gemäß einem oder mehreren der Patentansprüche 1 bis 16 und zweitens aus mindestens einem Schichtstoff (9a) aus mindestens einer Folie aus flexiblem Graphit (1,1',1'') und mindestens einer Kunststoffolie (21,21',21''), die eine Zugfestigkeit von mindestens 25 MPa und einen E-Modul von mindestens 0,4 GPa hat, aufgebaut sind, besteht.

18. Packungsgarn nach einem oder mehreren der Patentansprüche 1 bis 17,
**dadurch gekennzeichnet, daß**
es aus miteinander verdrillten Bändern aus einem Schichtstoff (9,9',9'',9a) besteht.

19. Packungsgarn nach einem oder mehreren der Patentansprüche 1 bis 18,
**dadurch gekennzeichnet, daß**
es aus nicht mehr als 12 miteinander verdrillten Bändern aus einem Schichtstoff (9,9',9'',9a) besteht.

20. Packungsgarn nach einem oder mehreren der Patentansprüche 1 bis 19,
**dadurch gekennzeichnet, daß**
jedes der miteinander verdrillten Bänder (9,9',9'',9a) aus bis zu vier übereinander angeordneten Lagen aus flexiblem Graphit (1,1',1'',1'''), von denen jede Lage mit mindestens einer verstärkenden Metall- (3,3',3'') oder Kunststoffolie (21,21',21'') verbunden ist, besteht.

21. Verfahren zum Herstellen eines Packungsgarns aus mindestens zwei Bändern aus einem Schichtstoff, der aus einer Lage flexiblen Graphits, die auf mindestens einer ihrer beiden Flachseiten mit einem verstärkenden Mittel verbunden ist, besteht,
**dadurch gekennzeichnet, daß**
- in einem ersten Schritt eine Bahn flexiblen Graphits (1) auf mindestens einer ihrer Flachseiten mit mindestens einer Lage einer Metallfolie (3,3') aus der Gruppe Nickel, Nickellegierungen, Eisen, Eisenlegierungen, Stahl, Edelstahl, Kupfer, Kupferlegierungen, Aluminium und Aluminiumlegierungen verbunden wird, wobei die Metallfolie (3,3') eine Dicke im Bereich von 5 bis 50 µm und eine Zugfestigkeit von mindestens 250 MPa aufweist,
- daß in einem zweiten Schritt der aus der Lage flexiblen Graphits (1) und mindestens einer mit dem flexiblen Graphit (1) verbundenen Metallfolie (3,3') bestehende Folienverbund in Bänder (9,9',9'') von nicht mehr als 5 mm Breite zerschnitten wird und
- daß in einem dritten Schritt mindestens zwei der nach dem zweiten Schritt erhaltenen Bänder (9,9',9'') nach einem textilen Verarbeitungsverfahren zu einem Garn (15,17) verarbeitet werden.

22. Verfahren zum Herstellen eines Packungsgarns aus mindestens zwei Bändern aus einem Schichtstoff, der aus alternierend angeordneten Schichten von mindestens zwei flächigen Werkstoffen, die miteinander verbunden sind, besteht, wobei der Schichtstoff erstens, aus mindestens einer Lage aus flexiblem Graphit und zweitens, mindestens einer Lage eines verstärkenden Mittels aufgebaut ist,
- wobei entweder beide äußeren Flachseiten der oberen und der unteren Schicht des Schichtstoffes aus flexiblem Graphit bestehen oder nur eine dieser Flachseiten aus flexiblem Graphit oder keine dieser Flachseiten aus flexiblem Graphit besteht,
**dadurch gekennzeichnet, daß**
in einem ersten Schritt mehr als eine Lage flexiblen Graphits (1,1',1'') auf mindestens einer ihrer Flachseiten mit mindestens einer Lage einer Metallfolie (3,3',3'') aus der Gruppe Nickel, Nickellegierungen, Eisen, Eisenlegierungen, Stahl, Edelstahl, Kupfer, Kupferlegierungen, Aluminium und Aluminiumlegierungen mit einer Dicke im Bereich von 5 bis 50 µm und mit einer Zugfestigkeit von mindestens 250 MPa an ihren Flachseiten so übereinandergelegt und miteinander verbunden werden, daß jede der in dem Verbund innen liegenden Flachseiten der Graphitlagen (1,1',1'') mit je einer Metallfolie (3,3',3'') verbunden ist und daß entweder keine oder eine oder beide der zwei außen liegenden Flachseiten des Verbundes mit einer Metallfolie (3,3') verbunden ist,
- daß in einem zweiten Schritt der aus den Lagen flexiblen Graphits (1,1',1'') und der Metallfolie (3) oder den Metallfolien (3,3',3'') bestehende Folienverbund in Bänder (9,9',9'') von nicht mehr als 5 mm Breite zerschnitten wird und
- daß in einem dritten Schritt mindestens zwei der nach dem zweiten Schritt erhaltenen Bänder (9,9',9'') nach einem textilen Verarbeitungsverfahren zu einem Garn (15,17) verarbeitet werden.

23. Verfahren zum Herstellen eines Packungsgarnes nach Patentanspruch 21 oder 22,
**dadurch gekennzeichnet, daß**
das nach dem dritten Verfahrensschritt erhaltene Packungsgarn (15) auf einen runden, elliptischen, ovalen oder rechteckigen Querschnitt kalibriert (17) wird.

24. Verfahren zum Herstellen eines Packungsgarns nach einem der Patentansprüche 21, 22 oder 23,
**dadurch gekennzeichnet, daß**
in dem ersten Verfahrensschritt oder nach dem ersten Verfahrensschritt aber vor dem zweiten Verfahrensschritt in dem Schichtstoff zusätzlich mindestens eine der freien Flachseiten der Folie aus flexiblem Graphit (1, 1',1'') oder/und mindestens eine der nicht mit der Graphitfolie (1,1',1'') verbundenen Flachseiten der Metallfolien (3,3',3'') mit einer Kunststoffolie (21,21',21'') aus der Gruppe Fluorpolymere, Polyester, Polyimid verbunden wird.

25. Verfahren zum Herstellen eines Packungsgarns nach einem der Patentansprüche 21 bis 24,
**dadurch gekennzeichnet, daß**
der nach dem ersten Verfahrensschritt erhaltene Schichtstoff oder die nach dem zweiten Verfahrensschritt erhaltenen Bänder (9,9',9'') mit einer Riffelung (19) oder Rillung (19) versehen werden, die quer zu ihrer Längserstreckung verläuft.

26. Verfahren zum Herstellen eines Packungsgarns nach einem der Patentansprüche 21 bis 25,
**dadurch gekennzeichnet, daß**
das die Verfahrensschritte zum Herstellen eines Packungsgarnes (15,17) zu einem kontinuierlichen Verfahren zusammengefaßt werden.

27. Verfahren zum Herstellen eines Packungsgarns nach einem oder mehreren der Patentansprüche 21 bis 26,
**dadurch gekennzeichnet, daß**
zum Verbinden der Lagen aus flexiblem Graphit (1,1',1'') mit den Lagen aus Metallfolien (3,3',3'') und zum Verbinden der Kunststoffolien (21,21',21'') mit der mindestens einen freien Flachseite der Graphitfolien (1,1',1'') und/oder der mindestens einen freien Flachseite der Metallfolien (3,3',3'') ein Kleber (2,2',2'',2''') aus der Gruppe Acrylate, Polysiloxane, Polyurethane, Polyamide, Acetate, Epoxidharze verwendet wird.

28. verfahren zum Herstellen eines Packungsgarns nach einem oder mehreren der Patentansprüche 21 bis 26,
**dadurch gekennzeichnet, daß**
das Verbinden der Lagen aus flexiblem Graphit (1,1',1'') mit den Lagen aus Metallfolien (3,3',3'') und das Verbinden der Kunststoffolien (21,21',21'') mit der mindestens einen freien Flachseite der Graphitfolien (1,1',1'') und/oder der mindestens einen freien Flachseite der Metallfolien (3,3',3'') ohne Verwendung eines Klebers durchgeführt wird.

29. Verfahren zum Herstellen eines Packungsgarns nach Patentanspruch 28,
**dadurch gekennzeichnet, daß**
die Lagen aus flexiblem Graphit (1,1',1'') mit der Kunststoffolie (21,21',21'') kleberfrei unter Verwendung von Haftvermittlern verbunden werden.

30. Verfahren zum Herstellen eines Packungsgarnes nach einem oder mehreren der Patentansprüche 21 bis 29,
**dadurch gekennzeichnet, daß**
in dem dritten Verfahrensschritt mindestens drei der nach dem zweiten Verfahrensschritt erzeugten Bänder (9,9',9'') durch Verflechten zu einem Garn (15) verarbeitet werden.

31. Verfahren zum Herstellen eines Packungsgarnes nach einem oder mehreren der Patentansprüche 21 bis 29,
**dadurch gekennzeichnet, daß**
in dem dritten Verfahrensschritt mindestens zwei der nach dem zweiten Verfahrensschritt erzeugten Bänder (9,9',9'') durch Verdrillen zu einem Garn (15) verarbeitet werden.

32. Verfahren nach einem oder mehreren der Patentansprüche 21 bis 31,
**dadurch gekennzeichnet, daß**
mindestens eins der mindestens zwei Bänder (9,9',9'') für das textile Verarbeiten zu einem Garn (15) vor diesem textilen Verarbeiten zu dem Garn (15) und nach dem Zerteilen des Folienverbundes in Bänder (9,9',9'') selbst verdrillt wird.

## Claims

1. A packing yarn consisting of at least two tapes, which have been bonded together in accordance with a yarn-production process, consisting of a laminate which consists of altematingly arranged laminations of at least two planar materials which are bonded together, consisting specifically, firstly, of at least one layer made of flexible graphite and, secondly, of at least one layer of a reinforcing agent,
- wherein either both outer flat sides of the upper lamination and of the lower lamination of the laminate consist of flexible graphite or only one of said flat sides consists of flexible graphite or neither of said flat sides consists of flexible graphite,
**characterised in that**
the tapes consisting of laminate (9, 9', 9") have a width of not more than 5 mm and consist of layers of flexible graphite (1, 1', 1") that has a thickness of not more than 1 mm and a bulk density within the range from 0.7 g/cm3 to 1.8 g/cm3
and of layers of metal foils (3, 3', 3") selected from the group comprising nickel, nickel alloys, iron, iron alloys, steel, high-grade steel, copper, copper alloys, aluminium, aluminium alloys having a thickness within the range from 5 (m to 50 (m and having a tensile strength of at least 250 MPa.

2. A packing yarn consisting of at least two tapes, which have been bonded together in accordance with a yarn-production process, consisting of a laminate which consists of a layer made of flexible graphite which on at least one of its two flat sides is bonded to at least one reinforcing agent,
**characterised in that**
the tapes consisting of laminate (9, 9', 9") have a width of not more than 5 mm and consist of a layer of flexible graphite (1) that has a thickness of not more than 1 mm and a bulk density within the range from 0.7 g/cm3 to 1.8 g/cm3
and of at least one layer of a metal foil (3, 3') selected from the group comprising nickel, nickel alloys, iron, iron alloys, steel, high-grade steel, copper, copper alloys, aluminium and aluminium alloys, the metal foil (3, 3') having a thickness within the range from 5 (m to 50 (m and a tensile strength of at least 250 MPa.

3. Packing yarn according to Claim 1 or 2,
**characterised in that**
the tapes consisting of laminate (9, 9', 9") additionally contain at least one plastic foil (21, 21', 21").

4. Packing yarn according to Claim 3,
**characterised in that**
the tapes consisting of laminate (9, 9', 9") additionally contain at least one plastic foil (21, 21', 21") made of a fluoropolymer.

5. Packing yarn according to one of Claims 1 to 4,
**characterised in that**
the metal foil (3, 3', 3") consists of pure nickel or corrosion-resistant steel.

6. Packing yarn according to one or more of Claims 1 to 5,
**characterised in that**
the tapes consisting of laminate (9, 9', 9") are corrugated at right angles to their longitudinal extent.

7. Packing yarn according to one or more of Claims 1 to 6,
**characterised in that**
the packing yarn (15, 17) consists of at least two tapes (9, 9', 9"), at least one of which has been twisted separately prior to processing of the at least two tapes (9, 9', 9") so as to form a packing yarn (15, 17).

8. Packing yarn according to one or more of Claims 1 to 7,
**characterised in that**
the tapes consisting of the laminate (9, 9', 9") have a width of not more than 3 mm, and the graphite foils (1, 1', 1") located in the tapes (9, 9', 9") have a thickness of not more than 0.5 mm.

9. Packing yarn according to one or more of Claims 1 to 7,
**characterised in that**
the tapes consisting of the laminate (9, 9', 9") have a width of not more than 2 mm, and the graphite foils (1, 1', 1") located in the tapes (9, 9', 9") have a thickness of not more than 0.35 mm.

10. Packing yarn according to one or more of Claims 1 to 9,
**characterised in that**
the at least one metal foil (3, 3', 3") reinforcing the foils or tapes made of flexible graphite (1, 1', 1") has a thickness within the range from 10 (m to 30 (m.

11. Packing yarn according to one or more of Claims 1 to 10,
**characterised in that**
at least one of the two outwardly facing flat sides of the foils upwardly and downwardly bounding the tapes consisting of the laminate (9, 9', 9") is covered by a plastic foil (21, 21', 21") selected from the group comprising perfluorinated polymeric hydrocarbons, polyester, polyimide and is bonded to said plastic foil.

12. Packing yarn according to one or more of Claims 1 to 11,
**characterised in that**
the flexible graphite (1, 1', 1") has a carbon content of at least 96 wt.%.

13. Packing yarn according to Claim 12,
**characterised in that**
the flexible graphite (1, 1', 1") has a carbon content of at least 99 wt.%.

14. Packing yarn according to one or more of Claims 1 to 13,
**characterised in that**
the metal foil (3, 3', 3") having a reinforcing effect is bonded to the flexible graphite (1, 1', 1") by means of an adhesive (2, 2', 2", 2''').

15. Packing yarn according to one or more of Claims 1 to 13,
**characterised in that**
the metal foil (3, 3', 3") having a reinforcing effect is bonded to the flexible graphite (1, 1', 1") without using an adhesive.

16. Packing yarn according to Claim 15,
**characterised in that**
the metal foil (3, 3', 3") having a reinforcing effect is bonded to the flexible graphite (1, 1', 1") in accordance with the process according to EP 0 616 884 B1.

17. A packing yarn consisting of at least two tapes, which have been bonded together in accordance with a yarn-production process, consisting of a laminate,
**characterised in that**
said packing yarn consists of at least two
tapes (9, 9', 9", 9a) which have been bonded together in accordance with a yarn-production process and which are constructed from at least two laminates (9, 9a) differing from one another, namely, firstly, from a laminate (9, 9', 9") consisting of at least one foil made of flexible graphite (1, 1', 1"), and of at least one foil made of metal (3, 3', 3"), in accordance with one or more of Claims 1 to 16 and, secondly, from at least one laminate (9a) consisting of at least one foil made of flexible graphite (1, 1', 1"), and of at least one plastic foil (21, 21', 21") that has a tensile strength of at least 25 MPa and a modulus of elasticity of at least 0.4 GPa.

18. Packing yarn according to one or more of Claims 1 to 17,
**characterised in that**
said packing yarn consists of tapes consisting of a laminate (9, 9', 9", 9a) which have been twisted together.

19. Packing yarn according to one or more of Claims 1 to 18,
**characterised in that**
said packing yarn consists of not more than 12 tapes consisting of a laminate (9, 9', 9", 9a) which have been twisted together.

20. Packing yarn according to one or more of Claims 1 to 19,
**characterised in that**
each of the tapes (9, 9', 9", 9a) which have been twisted together consists of up to four superimposed layers made of flexible graphite (1, 1', 1", 1'''), each layer being bonded to at least one reinforcing metal foil (3, 3', 3") or plastic foil (21, 21', 21").

21. A process for producing a packing yarn from at least two tapes consisting of a laminate which consists of a layer of flexible graphite which on at least one of its two flat sides is bonded to a reinforcing agent,
**characterised in that**
- in a first step a web of flexible graphite (1) is bonded on at least one of its flat sides to at least one layer of a metal foil (3, 3') selected from the group comprising nickel, nickel alloys, iron, iron alloys, steel, high-grade steel, copper, copper alloys, aluminium and aluminium alloys, the metal foil (3, 3') having a thickness within the range from 5 (m to 50 (m and a tensile strength of at least 250 MPa,
- in a second step the foil composite consisting of the layer of flexible graphite (1), and of at least one metal foil (3, 3') bonded to the flexible graphite (1) is cut up into tapes (9, 9', 9") having a width of not more than 5 mm and
- in a third step at least two of the tapes (9, 9', 9") obtained after the second step are processed in accordance with a textile processing process so as to form a yarn (15, 17).

22. A process for producing a packing yarn from at least two tapes consisting of a laminate which consists of altematingly arranged laminations of at least two planar materials which are bonded together, the laminate being constructed, firstly, from at least one layer made of flexible graphite and, secondly, from at least one layer of a reinforcing agent,
- wherein either both outer flat sides of the upper lamination and of the lower lamination of the laminate consist of flexible graphite or only one of said flat sides consists of flexible graphite or neither of said flat sides consists of flexible graphite,
**characterised in that**
in a first step more than one layer of flexible graphite (1, 1', 1") are superimposed, on at least one of their flat sides, with at least one layer of a metal foil (3, 3', 3") selected from the group comprising nickel, nickel alloys, iron, iron alloys, steel, high-grade steel, copper, copper alloys, aluminium and aluminium alloys having a thickness within the range from 5 (m to 50 (m and having a tensile strength of at least 250 MPa and are bonded together on their flat sides in such a way that each of the flat sides of the graphite layers (1, 1', 1") situated on the inside within the composite is bonded to a respective metal foil (3, 3', 3") and **in that** either neither or one or both of the two flat sides of the composite situated on the outside is bonded to a metal foil (3, 3'),
- **in that** in a second step the foil composite consisting of the layers of flexible graphite (1, 1', 1") and of the metal foil (3) or of the metal foils (3, 3', 3") is cut up into tapes (9, 9', 9") having a width of not more than 5 mm and
- **in that** in a third step at least two of the tapes (9, 9', 9") obtained after the second step are processed in accordance with a textile processing process so as to form a yarn (15, 17).

23. Process for producing a packing yarn, according to Claim 21 or 22,
**characterised in that**
the packing yarn (15) obtained after the third process step is calibrated (17) to a circular, elliptical, oval or rectangular cross-section.

24. Process for producing a packing yarn, according to one of Claims 21, 22 or 23,
**characterised in that**
in the first process step or after the first process step but before the second process step in addition at least one of the free flat sides of the foil made of flexible graphite (1, 1', 1") or/and at least one of the flat sides of the metal foils (3, 3', 3") that are not bonded to the graphite foil (1, 1', 1") is/are bonded in the laminate to a plastic foil (21, 21', 21") selected from the group comprising fluoropolymers, polyester, polyimide.

25. Process for producing a packing yarn, according to one of Claims 21 to 24,
**characterised in that**
the laminate obtained after the first process step or the tapes (9, 9', 9") obtained after the second process step is/are provided with a corrugation (19) or fluting (19) which extends at right angles to its/their longitudinal extent.

26. Process for producing a packing yarn, according to one of Claims 21 to 25,
**characterised in that**
the process steps for producing a packing yarn (15, 17) are combined into a continuous process.

27. Process for producing a packing yarn, according to one of Claims 21 to 26,
**characterised in that**
for the purpose of bonding the layers made of flexible graphite (1, 1', 1") to the layers consisting of metal foils (3, 3', 3") and for the purpose of bonding the plastic foils (21, 21', 21 ") to the at least one free flat side of the graphite foils (1, 1', 1") and/or to the at least one free flat side of the metal foils (3, 3', 3") use is made of an adhesive (2, 2', 2", 2''') selected from the group comprising acrylates, polysiloxanes, polyurethanes, polyamides, acetates, epoxy resins.

28. Process for producing a packing yarn, according to one of Claims 21 to 26,
**characterised in that**
bonding of the layers made of flexible graphite (1, 1', 1") to the layers consisting of metal foils (3, 3', 3") and bonding of the plastic foils (21, 21', 21") to the at least one free flat side of the graphite foils (1, 1', 1") and/or to the at least one free flat side of the metal foils (3, 3', 3") is carried out without using an adhesive.

29. Process for producing a packing yarn, according to Claim 28,
**characterised in that**
the layers made of flexible graphite (1, 1', 1") are bonded to the plastic foil (21, 21', 21") in adhesive-free manner using coupling agents.

30. Process for producing a packing yarn, according to one or more of Claims 21 to 29,
**characterised in that**
in the third process step at least three of the tapes (9, 9', 9") produced after the second process step are processed by braiding so as to form a yarn (15).

31. Process for producing a packing yarn, according to one or more of Claims 21 to 29,
**characterised in that**
in the third process step at least two of the tapes (9, 9', 9") produced after the second process step are processed by twisting so as to form a yarn (15).

32. Process according to one or more of Claims 21 to 31,
**characterised in that**
at least one of the at least two tapes (9, 9', 9") for the textile processing to form a yarn (15) is itself twisted before said textile processing to form the yarn (15) and after the separation of the foil composite into tapes (9, 9', 9").

## Revendications

1. Garniture d'étanchéité composée d'au moins deux bandes reliées entre elles suivant un procédé de fabrication de garnitures et conçues dans un stratifié qui se compose d'au moins deux matériaux plats, disposés en alternance et reliés entre eux, et plus précisément d'une part d'au moins une couche de graphite flexible et d'autre part d'au moins une couche d'agent de renforcement,
moyennant quoi soit les deux plats extérieurs de la couche supérieure et de la couche inférieure du stratifié en graphite flexible, soit seul l'un de ces plats se compose de graphite flexible, soit aucun de ces plats ne se compose de graphite flexible,
**caractérisée en ce que**
les bandes en stratifié (9, 9', 9") présentent une largeur qui n'excède pas 5 mm et se composent de couches de graphite flexible (1, 1', 1") d'une épaisseur ne dépassant pas 1 mm et d'une masse volumique apparente comprise dans la plage de 0,7 à 1,8 g/cm³,
et de couches de feuilles de métal (3, 3', 3") du groupe nickel, alliages de nickel, fer, alliages de fer, acier, acier spécial, cuivre, alliages de cuivre, aluminium, alliages d'aluminium, d'une épaisseur comprise dans la plage de 5 à 50 µm et d'une résistance à la traction d'au moins 250 MPa.

2. Garniture d'étanchéité composée d'au moins deux bandes reliées entre elles suivant un procédé de fabrication de garnitures et conçues dans un stratifié qui se compose d'une couche de graphite flexible reliée à au moins un agent de renforcement sur au moins un de ses deux plats,
**caractérisée en ce que**
les bandes en stratifié (9, 9', 9") présentent une largeur qui n'excède pas 5 mm et se composent d'une couche de graphite flexible (1) d'une épaisseur ne dépassant pas 1 mm et d'une masse volumique apparente comprise dans la plage de 0,7 à 1,8 g/cm³,
et d'au moins une couche d'une feuille de métal (3, 3') du groupe nickel, alliages de nickel, fer, alliages de fer, acier, acier spécial, cuivre, alliages de cuivre, aluminium, alliages d'aluminium, la feuille de métal (3, 3') présentant une épaisseur comprise dans la plage de 5 à 50 µm et une résistance à la traction d'au moins 250 MPa.

3. Garniture d'étanchéité selon la revendication 1 ou 2,
**caractérisée en ce que**
les bandes en stratifié (9, 9', 9") comprennent en outre au moins une feuille de plastique (21, 21', 21").

4. Garniture d'étanchéité selon la revendication 3,
**caractérisée en ce que**
les bandes en stratifié (9, 9', 9") comprennent en outre au moins une feuille de plastique (21, 21', 21") constituée d'un polymère fluoré.

5. Garniture d'étanchéité selon l'une quelconque des revendications 1 à 4,
**caractérisée en ce que**
la feuille de métal (3, 3', 3") est en nickel pur ou en acier non-corrosif.

6. Garniture d'étanchéité selon l'une ou plusieurs des revendications 1 à 5
**caractérisée en ce que**
les bandes en stratifié (9, 9', 9") sont cannelées en diagonale par rapport à leur extension longitudinale.

7. Garniture d'étanchéité selon l'une ou plusieurs des revendications 1 à 6,
**caractérisée en ce que**
la garniture d'étanchéité (15, 17) se compose d'au moins deux bandes (9, 9', 9") dont au moins une est torsadée sur elle-même avant la transformation des deux bandes (9, 9', 9") au moins en une garniture d'étanchéité (15, 17).

8. Garniture d'étanchéité selon l'une ou plusieurs des revendications 1 à 7,
**caractérisée en ce que**
les bandes en stratifié (9, 9', 9") présentent une largeur qui n'excède pas 3 mm et les feuilles de graphite (1, 1', 1") se trouvant dans les bandes (9, 9', 9") présentent une épaisseur ne dépassant pas 0,5 mm.

9. Garniture d'étanchéité selon l'une ou plusieurs des revendications 1 à 7,
**caractérisée en ce que**
les bandes en stratifié (9, 9', 9") présentent une largeur qui n'excède pas 2 mm et les feuilles de graphite (1, 1', 1") se trouvant dans les bandes (9, 9', 9") présentent une épaisseur ne dépassant pas 0,35 mm.

10. Garniture d'étanchéité selon l'une ou plusieurs des revendications 1 à 9,
**caractérisée en ce que**
les feuilles ou les bandes (1, 1', 1") en graphite flexible présentent au moins une feuille de métal de renforcement (3, 3', 3") d'une épaisseur comprise dans la plage de 10 à 30 µm.

11. Garniture d'étanchéité selon l'une ou plusieurs des revendications 1 à 10,
**caractérisée en ce qu'**
au moins un des deux plats tournés vers l'extérieur des feuilles limitant les bandes en stratifié (9, 9', 9") vers le haut et vers le bas est recouvert d'une feuille de plastique (21, 21', 21") du groupe hydrocarbures polymères perfluorés, polyester, polyimide, à laquelle il est relié.

12. Garniture d'étanchéité selon l'une ou plusieurs des revendications 1 à 11,
**caractérisée en ce que**
le graphite flexible (1, 1', 1") présente une teneur en carbone d'au moins 96 % en poids.

13. Garniture d'étanchéité selon la revendication 12,
**caractérisée en ce que**
le graphite flexible (1, 1', 1") présente une teneur en carbone d'au moins 99 % en poids.

14. Garniture d'étanchéité selon l'une ou plusieurs des revendications 1 à 13,
**caractérisée en ce que**
la feuille de métal agissant en renforcement (3, 3', 3") est reliée au graphite flexible (1, 1', 1") par une colle (2, 2', 2", 2''').

15. Garniture d'étanchéité selon l'une ou plusieurs des revendications 1 à 13,
**caractérisée en ce que**
la feuille de métal agissant en renforcement (3, 3', 3") est reliée au graphite flexible (1, 1', 1") sans colle.

16. Garniture d'étanchéité selon la revendication 15,
**caractérisée en ce que**
la feuille de métal agissant en renforcement (3, 3', 3") est reliée au graphite flexible (1, 1', 1") suivant le procédé décrit dans le brevet EP 0 616 884 B1.

17. Garniture d'étanchéité composée d'au moins deux bandes en stratifié reliées l'une à l'autre par un procédé de fabrication de garnitures,
**caractérisée en ce qu'**
elle est composée d'au moins deux bandes (9, 9', 9") reliées l'une à l'autre suivant un procédé de fabrication de garnitures, lesquelles bandes sont construites à partir d'au moins deux stratifiés (9, 9a) différents l'un de l'autre, c'est à dire tout d'abord d'un stratifié (9, 9', 9") doté d'au moins une feuille de graphite flexible (1, 1', 1") et d'au moins une feuille de métal (3, 3', 3") suivant une ou plusieurs des revendications 1 à 16, et d'autre part d'au moins un stratifié (9a) doté d'au moins une feuille de graphite flexible (1, 1', 1") et d'au moins une feuille de plastique (21, 21', 21") qui présente une résistance à la traction d'au moins 25 MPa et un coefficient d'élasticité d'au moins 0,4 GPa.

18. Garniture d'étanchéité selon l'une ou plusieurs des revendications 1 à 17,
**caractérisée en ce qu'**
elle est composée de bandes en stratifié (9, 9', 9", 9a) torsadées les unes avec les autres.

19. Garniture d'étanchéité selon l'une ou plusieurs des revendications 1 à 18,
**caractérisée en ce qu'**
elle se compose de pas plus de 12 bandes en stratifié (9, 9', 9", 9a) torsadées les unes avec les autres.

20. Garniture d'étanchéité selon l'une ou plusieurs des revendications 1 à 19,
**caractérisée en ce que**
chacune des bandes en stratifié (9, 9', 9", 9a) torsadées les unes avec les autres se compose de jusqu'à quatre couches superposées en graphite flexible (1, 1', 1", 1"'), dont chaque couche est reliée à au moins une feuille de renforcement en métal (3, 3', 3") ou à une feuille de plastique (21, 21', 21").

21. Procédé de fabrication d'une garniture d'étanchéité composée d'au moins deux bandes conçues dans un stratifié qui se compose d'une couche de graphite flexible reliée à un agent de renforcement au moins sur l'un de ses deux plats,
**caractérisé en ce que**
dans une première étape, une glissière de graphite flexible (1) est reliée, au moins sur l'un de ses plats, à au moins une couche d'une feuille de métal (3, 3') du groupe nickel, alliages de nickel, fer, alliages de fer, acier, acier spécial, cuivre, alliages de cuivre, aluminium et alliages d'aluminium d'une épaisseur comprise dans la plage de 5 à 50 µm et d'une résistance à la traction d'au moins 250 MPa,
dans une deuxième étape, le composite de feuilles composé de la couche de graphite flexible (1) et d'au moins une feuille de métal (3, 3') relié au graphite flexible (1) est divisé en bandes (9, 9', 9") d'une largeur ne dépassant pas 5 mm, et
dans une troisième étape, au moins deux des bandes (9, 9', 9") obtenues après la deuxième étape sont transformées en une garniture (15, 17) suivant un procédé de traitement du textile.

22. Procédé de fabrication d'une garniture d'étanchéité composée d'au moins deux bandes conçues dans un stratifié qui se compose d'au moins deux matériaux de surface, disposés en alternance et reliés entre eux, le stratifié étant d'une part construit à partir d'au moins une couche de graphite flexible et d'autre part à partir d'au moins une couche d'agent de renforcement,
moyennant quoi, soit les deux plats extérieurs de la couche supérieure et de la couche inférieure du stratifié sont en graphite flexible, soit seul l'un de ces plats se compose de graphite flexible, soit aucun de ces plats ne se compose de graphite flexible,
**caractérisé en ce que**
dans une première étape, plus d'une couche de graphite flexible (1, 1', 1") chevauche au moins l'un de ses plats avec au moins une couche d'une feuille de métal (3, 3', 3") du groupe nickel, alliages de nickel, fer, alliages de fer, acier, acier spécial, cuivre, alliages de cuivre, aluminium alliages d'aluminium d'une épaisseur comprise dans la plage de 5 à 50 µm et d'une résistance à la traction d'au moins 250 MPa sur son plat, et ces couches sont reliées entre elles de manière à ce que chacun des plats des couches de graphite (1, 1', 1") se trouvant à l'intérieur du composite soit à chaque fois relié à une feuille de métal (3, 3', 3") et soit aucun, soit un ou deux des deux plats du composite se trouvant à l'extérieur est (sont) relié(s) à une feuille de métal (3, 3'),
dans une deuxième étape, le composite de feuilles composé des couches de graphite flexible (1, 1', 1") et de la feuille de métal (3) ou des feuilles de métal (3, 3', 3") est divisé en bandes (9, 9', 9") d'une largeur ne dépassant pas 5 mm, et
dans une troisième étape, au moins deux des bandes (9, 9', 9") obtenues après la deuxième étape sont transformées en une garniture (15, 17) suivant un procédé de traitement du textile.

23. Procédé de fabrication d'une garniture d'étanchéité selon la revendication 21 ou 22,
**caractérisé en ce que**
la garniture d'étanchéité (15) obtenue après la troisième étape de procédé est calibrée (17) sur une section transversale ronde, elliptique, ovale ou rectangulaire.

24. Procédé de fabrication d'une garniture d'étanchéité selon l'une quelconque des revendications 21, 22 ou 23,
**caractérisé en ce que**
dans la première étape de procédé ou après la première étape de procédé, mais avant la deuxième étape de procédé, au moins un des plats libres de la feuille de graphite flexible (1, 1', 1") ou/et au moins un des plats des feuilles de métal (3, 3', 3") non relié à la feuille de graphite (1, 1', 1") est relié dans le stratifié à une feuille de plastique (21, 21', 21") du groupe polymère fluoré, polyester, polyimide.

25. Procédé de fabrication d'une garniture d'étanchéité selon l'une quelconque des revendications 21 à 24,
**caractérisé en ce que**
le stratifié obtenu après la première étape de procédé ou les bandes (9, 9', 9") obtenues après la deuxième étape de procédé sont pourvus d'un grain (19) ou d'un cannelage (19) en diagonale par rapport à son extension longitudinale.

26. Procédé de fabrication d'une garniture d'étanchéité selon l'une quelconque des revendications 21 à 25,
**caractérisé en ce que**
les étapes de procédés pour fabriquer une garniture d'étanchéité (15, 17) sont regroupées en un procédé continu.

27. Procédé de fabrication d'une garniture d'étanchéité selon l'une ou plusieurs des revendications 21 à 26,
**caractérisé en ce qu'**
une colle (2, 2', 2", 2''') du groupe acrylate, polysiloxane, polyuréthane, polyamide, acétate, résine époxy, est utilisée pour relier les couches de graphite flexible (1, 1', 1") aux couches de feuilles de métal (3, 3', 3") et pour relier les feuilles de plastique (21, 21', 21") à au moins l'un des plats libres des feuilles de graphite (1, 1', 1") et/ou à au moins l'un des plats libres des feuilles de métal (3, 3', 3").

28. Procédé de fabrication d'une garniture d'étanchéité selon l'une ou plusieurs des revendications 21 à 26,
**caractérisé en ce que**
les couches de graphite flexible (1, 1', 1") sont reliées aux couches de feuilles de métal (3, 3', 3"), et les feuilles de plastique (21, 21', 21") sont reliées à au moins l'un des plats libres des feuilles de graphite (1, 1', 1") et/ou à au moins l'un des plats libres des feuilles de métal (3, 3', 3") sans qu'une colle soit utilisée.

29. Procédé de fabrication d'une garniture d'étanchéité selon la revendication 28,
**caractérisé en ce que**
les couches de graphite flexible (1, 1', 1") sont reliées aux feuilles de plastique (21, 21', 21") sans colle grâce à des agents de pontage.

30. Procédé de fabrication d'une garniture d'étanchéité selon l'une ou plusieurs des revendications 21 à 29,
**caractérisé en ce que**
dans la troisième étape de procédé, au moins trois des bandes (9, 9', 9") obtenues après la deuxième étape de procédé sont transformées en une garniture (15) par entrelacement.

31. Procédé de fabrication d'une garniture d'étanchéité selon l'une ou plusieurs des revendications 21 à 29,
**caractérisé en ce que**
dans la troisième étape de procédé, au moins deux des bandes (9, 9', 9") obtenues après la deuxième étape de procédé sont transformées en une garniture (15) par torsion.

32. Procédé selon l'une ou plusieurs des revendications 21 à 31,
**caractérisé en ce qu'**
au moins une des deux bandes (9, 9', 9") au moins pour la transformation textile en une garniture (15) est autotorsadée avant cette transformation textile en une garniture (15) et après la division du composite de feuilles de bandes (9, 9', 9").
